# EUROPÄISCHE PATENTANMELDUNG

(11) **EP 1 093 864 A2**
(43) Veröffentlichungstag der Anmeldung: **25.04.2001**
(21) Anmeldenummer: 00119443.0
(22) Anmeldetag: 14.09.2000
(51) Int. Cl.: B08B 3/02

(54) **Reinigungsstation zum Besprühen und/oder Spülen von Fahrzeugkarosserien und Verfahren zum Reinigen von Fahrzeugkarosserien**

(30) Priorität: 19.10.1999 DE 19950199
(71) Anmelder: Dürr Systems GmbH, 70435 Stuttgart (DE)
(72) Erfinder: Besinger, Hartwig, 71729 Erdmannhausen (DE); Mogck, Gerhard, 74072 Heilbronn (DE)
(74) Vertreter: Hoeger, Stellrecht & Partner

(57) **Zusammenfassung**

Um eine Reinigungsstation zum Besprühen und/oder Spülen von Fahrzeugkarosserien (306) mit einem Naßmedium, umfassend eine Drehvorrichtung, welche eine Aufnahme für eine Fahrzeugkarosserie umfaßt und mittels welcher die Fahrzeugkarosserie in mindestens eine Reinigungsstellung drehbar ist, wobei die Reinigungsstation mindestens eine bewegliche (150,280) Sprüh- oder Spülvorrichtung umfaßt, welche bei in der Reinigungsstellung befindlicher Fahrzeugkarosserie relativ zu der Fahrzeugkarosserie in eine der Reinigungsstellung der Fahrzeugkarosserie zugeordnete Arbeitsstellung bewegbar ist, zu schaffen, welche es ermöglicht, ein gutes Reinigungsergebnis auch an schwer zugänglichen Stellen der Fahrzeugkarosserie zu erzielen, wird vorgeschlagen, daß die Reinigungsstation mindestens eine bewegliche Spülvorrichtung umfaßt, die in der der Reinigungsstellung zugeordneten Arbeitsstellung so an einer Eingangsöffnung eines Hohlraums der Fahrzeugkarosserie angeordnet ist, daß der betreffende Hohlraum durchspülbar ist.

## Beschreibung

Die vorliegende Erfindung betrifft eine Reinigungsstation zum Besprühen und/oder Spülen von Fahrzeugkarosserien mit einem Naßmedium, die eine Drehvorrichtung umfaßt, welche eine Aufnahme für eine Fahrzeugkarosserie umfaßt und mittels welcher die Fahrzeugkarosserie in mindestens eine Reinigungsstellung drehbar ist, wobei die Reinigungsstation mindestens eine bewegliche Sprüh- oder Spülvorrichtung umfaßt, welche bei in der Reinigungsstellung befindlicher Fahrzeugkarosserie relativ zu der Fahrzeugkarosserie in eine der Reinigungsstellung der Fahrzeugkarosserie zugeordnete Arbeitsstellung bewegbar ist.

Ferner betrifft die vorliegende Erfindung ein Verfahren zum Reinigen von Fahrzeugkarosserien durch Besprühen und/oder Spülen der Fahrzeugkarosserien mit einem Naßmedium, bei dem eine Fahrzeugkarosserie mittels einer Drehvorrichtung in mindestens eine Reinigungsstellung gedreht wird, wobei mindestens eine bewegliche Sprüh- oder Spülvorrichtung bei in der Reinigungsstellung befindlicher Fahrzeugkarosserie relativ zu der Fahrzeugkarosserie in eine der Reinigungsstellung der Fahrzeugkarosserie zugeordnete Arbeitsstellung bewegt wird.

Aus dem Stand der Technik sind sogenannte "body-washer" zum Reinigen aus dem Karosserierohbau kommender Fahrzeugkarosserien vor der Vorbehandlung und Beschichtung der Fahrzeugkarosserien in einer auf den "body-washer" folgenden Beschichtungsanlage bekannt, in denen die zu reinigende Fahrzeugkarosserie um einen Winkel von typischerweise 15 bis 20° gegen die Horizontale gekippt wird, im gekippten Zustand mittels Sprühvorrichtungen von außen abgesprüht wird, in die horizontale Ausgangsstellung zurückgekippt und dann aus dem "body-washer" herausgefahren wird.

Bei diesen bekannten Reinigungsstationen sind die Sprühvorrichtungen außerhalb der Bewegungskontur der zu reinigenden Fahrzeugkarosserien angeordnet. Es ist daher erforderlich, einen großen Abstand zwischen den Sprühvorrichtungen und den abzusprühenden Bereichen der Fahrzeugkarosserie einzuhalten. Im Innenraum der Fahrzeugkarosserie angeordnete Innenflächen und in der Fahrzeugkarosserie vorhandene Hohlräume (beispielsweise in den Säulen oder Schwellern der Karosserie) können in vielen Fällen nur unzureichend oder gar nicht gereinigt werden.

Eine Reinigungsstation gemäß dem Oberbegriff von Anspruch 1 und ein Reinigungsverfahren gemäß dem Oberbegriff von Anspruch 33 sind aus der DE 197 30 886 A1 bekannt.

Die aus der DE 197 30 886 A1 bekannte Reinigungsstation umfaßt ausschließlich Sprüheinrichtungen, mit denen in der Fahrzeugkarosserie vorhandene Hohlräume nur unzureichend oder gar nicht gereinigt werden können.

Der vorliegenden Erfindung liegt daher die Aufgabe zugrunde, eine Reinigungsstation der eingangs genannten Art zu schaffen, welche es ermöglicht, ein gutes Reinigungsergebnis auch an schwer zugänglichen Stellen der Fahrzeugkarosserie zu erzielen.

Diese Aufgabe wird bei einer Reinigungsstation mit den Merkmalen des Oberbegriffs von Anspruch 1 erfindungsgemäß dadurch gelöst, daß die Reinigungsstation mindestens eine bewegliche Spülvorrichtung umfaßt, die in der der Reinigungsstellung zugeordneten Arbeitsstellung so an einer Eingangsöffnung eines Hohlraums der Fahrzeugkarosserie angeordnet ist, daß der betreffende Hohlraum durchspülbar ist.

Die erfindungsgemäße Lösung ermöglicht es, den betreffenden Hohlraum der Fahrzeugkarosserie mittels der Spülvorrichtung gezielt zu durchspülen und somit in wirksamer Weise von Kontaminationen zu befreien. Dies ist wesentlich zur Erzielung eines guten Reinigungsergebnisses, da die in Hohlräumen der Fahrzeugkarosserien enthaltenen Kontaminationen ein besonderes Problem für die Reinigung darstellen.

Für die Qualität des Reinigungsergebnisses ist dabei in erster Linie die zum Spülen verwendete Menge des Naßmediums und erst in zweiter Linie der Druck, unter welchem das Naßmedium appliziert wird, maßgeblich.

Die bewegliche Sprüh- oder Spülvorrichtung der erfindungsgemäßen Reinigungsstation kann für einen Drehvorgang der Drehvorrichtung in eine Ruhestellung bewegt werden, in welcher die Sprüh- oder Spülvorrichtung vollständig außerhalb der Bewegungskonturen der Fahrzeugkarosserie und der Drehvorrichtung angeordnet ist, so daß die Drehung der Fahrzeugkarosserie durch die Sprüh- oder Spülvornichtung in keiner Weise behindert wird. Für den Reinigungsvorgang kann die bewegliche Sprüh- oder Spülvorrichtung beliebig nah und in beliebiger Orientierung an die zu reinigenden Bereiche der Fahrzeugkarosserie heranbewegt werden.

Die für den Reinigungsvorgang von der Sprüh- oder Spülvorrichtung eingenommene Arbeitsstellung ist auf die jeweilige Reinigungsstellung der Fahrzeugkarosserie abgestimmt; nimmt die Fahrzeugkarosserie während des Reinigungsvorgangs mehrere Reinigungsstellungen ein, so kann der Sprüh- oder Spülvorrichtung für jede dieser Reinigungsstellungen der Fahrzeugkarosserie eine andere Arbeitsstellung zugeordnet sein. Die Art und die Anzahl der Reinigungsstellungen der Fahrzeugkarosserie und die diesen Reinigungsstellungen zugeordneten Arbeitsstellungen der beweglichen Sprüh- oder Spülvorrichtung können an die Gestalt der jeweils zu reinigenden Fahrzeugkarosserien angepaßt und somit für jeden Fahrzeugkarosserietyp optimiert werden.

Um schwer zugängliche Innenflächen einer zu reinigenden Fahrzeugkarosserie gezielt reinigen zu können, ist es günstig, wenn die Reinigungsstation mindestens eine bewegliche Sprüh- oder Spülvorrichtung umfaßt, die in den Innenraum der Fahrzeugkarosserie hineinbewegbar ist.

Eine hohe Durchflußmenge in einer bestimmten vorgegebenen Zeit kann dadurch erreicht werden, daß der Hohlraum der Fahrzeugkarosserie, der gespült wird, in der Reinigungsstellung im wesentlichen vertikal ausgerichtet ist. In diesem Fall sorgt die Schwerkraft für ein zügiges Abfließen des Naßmediums aus dem Hohlraum durch an dessen unterem Ende befindliche Austrittsöffnungen.

Um für die unterschiedlichen zu reinigenden Bereiche der Fahrzeugkarosserie jeweils ein optimales Auslaufverhalten zu erzielen, ist es günstig, wenn die Fahrzeugkarosserie mittels der Drehvorrichtung in mehrere voneinander verschiedene Reinigungsstellungen drehbar ist. Nimmt die Fahrzeugkarosserie nacheinander diese verschiedenen Reinigungsstellungen ein, so können in jeder dieser Reinigungsstellungen jeweils diejenigen Bereiche der Fahrzeugkarosserie gereinigt werden, welche in der betreffenden Reinigungsstellung besonders gut zugänglich sind und für welche die Fahrzeugkarosserie in der betreffenden Reinigungsstellung das beste Auslauf- oder Abtropfverhalten zeigt.

Außerdem entfällt durch die Möglichkeit, mittels ein und derselben Drehvorrichtung die Fahrzeugkarosserie in mehrere voneinander verschiedene Reinigungsstellungen zu bewegen, die Notwendigkeit, für jede dieser Reinigungsstellungen eine separate Dreh- oder Kippvorrichtung vorzusehen. Dadurch kann die erforderliche Gesamtlänge der Reinigungsstation klein gehalten werden. Die Länge der Drehvorrichtung der Reinigungsstation muß nur wenig größer sein als die Länge einer Fahrzeugkarosserie.

Um ein gutes Auslaufverhalten der zu reinigenden Fahrzeugkarosserie zu erzielen, ist es günstig, wenn die Fahrzeugkarosserie mittels der Drehvorrichtung um eine im wesentlichen horizontale Drehachse drehbar ist.

Insbesondere kann vorgesehen sein, daß die Drehachse die Fahrzeugkarosserie nicht schneidet, sondern unterhalb oder oberhalb derselben angeordnet ist.

Da die Hohlräume in der Bodengruppe (insbesondere in den Schwellern) der Fahrzeugkarosserie, die häufig besonders stark verschmutzt sind und deren Reinigung daher besonders wichtig ist, im wesentlichen parallel zur Längsrichtung der Fahrzeugkarosserie verlaufen, ist es günstig, wenn die Fahrzeugkarosserie mittels der Drehvorrichtung um eine quer zur Längsrichtung der Fahrzeugkarosserie, vorzugsweise im wesentlichen senkrecht zur Längsrichtung der Fahrzeugkarosserie, ausgerichtete Drehachse drehbar ist. Dadurch ist es möglich, die vorstehend erwähnten Hohlräume in der Bodengruppe der Fahrzeugkarosserie möglichst stark gegen die Horizontale zu neigen, um ein günstiges Auslaufverhalten beim Spülen dieser Hohlräume zu erzielen.

Wenn die Fahrzeugkarosserie vorteilhafterweise mittels der Drehvorrichtung um einen Winkel von mindestens 90° drehbar ist, so können die Hohlräume in der Bodengruppe der Fahrzeugkarosserie im wesentlichen vertikal ausgerichtet und somit ein optimales Auslaufverhalten erreicht werden.

Ist die Fahrzeugkarosserie mittels der Drehvorrichtung um einen Winkel von mindestens 180° drehbar, so ist es möglich, für jeden in der zu reinigenden Fahrzeugkarosserie angeordneten Hohlraum eine Reinigungsstellung vorzugeben, in welcher dieser Hohlraum im wesentlichen vertikal ausgerichtet ist.

Bei einer bevorzugten Ausgestaltung der erfindungsgemäßen Reinigungsstation ist vorgesehen, daß die Fahrzeugkarosserie mittels der Drehvorrichtung um einen Winkel von 360° drehbar ist. In diesem Fall kann die Fahrzeugkarosserie in Reinigungsstellungen gebracht werden, in denen die Karosserie um einen beliebigen Winkel gegen die Horizontale gedreht ist. Somit ist es möglich, die Hohlräume in der Fahrzeugkarosserie nicht nur in einer Richtung, beispielsweise von hinten nach vorne, sondern in zwei Richtungen, also beispielsweise auch von vorne nach hinten, zu durchspülen. Außerdem ist mit einer um volle 360° drehbaren Drehvorrichtung jede Reinigungsstellung durch fortwährendes Drehen In ein und derselben Drehrichtung erreichbar, so daß ein flüssiger Bewegungsablauf erzielt wird und die für das Drehen benötigten Zeiten kurz gehalten werden können.

Besonders günstig ist es, wenn die Drehvorrichtung der Reinigungsstation so ausgebildet ist, daß die in der Aufnahme aufgenommene Fahrzeugkarosserie um die Drehachse der Drehvorrichtung frei drehbar und in beliebig vorgebbaren Reinigungsstellungen anhaltbar ist. Da die Fahrzeugkarosserie um die Drehachse der Drehvorrichtung frei, das heißt in beliebige Drehwinkel, drehbar ist und die Reinigungsstellungen, in denen die Fahrzeugkarosserie zum Absprühen oder Spülen mit dem Naßmedium gehalten wird, beliebig vorgebbar sind, ist es möglich, jede Fahrzeugkarosserie - in Abhängigkeit von der Gestalt des jeweiligen Fahrzeugkarosserietyps - eine oder mehrere optimale Reinigungsstellungen einnehmen zu lassen. Insbesondere ist es möglich, die Reinigungsstellung, insbesondere den zum Erreichen der Reinigungsstellung erforderlichen Drehwinkel, in Abhängigkeit vom Typ der zu reinigenden Fahrzeugkarosserie vorzugeben, so daß jede Fahrzeugkarosserie, die in der Reinigungsstation gereinigt wird, in die für sie jeweils optimalen Reinigungsstellungen gebracht wird, auch wenn Fahrzeugkarosserien unterschiedlichen Typs nacheinander dieselbe Reinigungsstation durchlaufen.

Wenn vorteilhafterweise vorgesehen ist, daß die Fahrzeugkarosserie mittels der Drehvorrichtung in zwei einander entgegengesetzte Drehrichtungen drehbar ist, so ist hierdurch gewährleistet, daß unabhängig von der Art und Abfolge der von der Fahrzeugkarosserie einzunehmenden Reinigungsstellungen stets der kürzeste Drehweg zur Überführung der Fahrzeugkarosserie von der einen Reinigungsstellung in die darauf folgende Reinigungsstellung benutzt werden kann.

Um zu gewährleisten, daß die Fahrzeugkarosserie in jeder Reinigungsstellung sicher an der Drehvorrichtung gehalten ist, ist vorteilhafterweise vorgesehen, daß die Reinigungsstation eine Verriegelungseinrichtung umfaßt, mittels derer die Fahrzeugkarosserie an der Drehvorrichtung festlegbar ist.

Grundsätzlich kann vorgesehen sein, daß diese Verriegelungseinrichtung mittels eines Antriebs betätigt wird, welcher an einem Drehrahmen der Drehvorrichtung angeordnet ist und sich beim Drehen der Fahrzeugkarosserie mit derselben mitdreht.

In diesem Fall müssen jedoch elektrische Speise- und Steuerleitungen für den Verriegelungsantrieb bis auf den sich mit der Fahrzeugkarosserie mitdrehenden Teil der Drehvorrichtung geführt werden, was aufwendig ist und eine hohe Störanfälligkeit zur Folge hat. Außerdem muß ein an dem sich mit der Fahrzeugkarosserie mitdrehenden Teil der Drehvorrichtung angeordneter Verriegelungsantrieb mittels geeigneter Abdeckungen vor dem zur Reinigung der Fahrzeugkarosserie verwendeten Naßmedium geschützt werden.

Um diese Nachteile zu vermeiden, ist bei einer bevorzugten Ausgestaltung der erfindungsgemäßen Reinigungsstation vorgesehen, daß die Verriegelungseinrichtung einen sich mit der Fahrzeugkarosserie mitdrehenden Verriegelungsteil und einen sich nicht mit der Fahrzeugkarosserie mitdrehenden Antriebsteil umfaßt.

Der sich nicht mitdrehende, externe Antriebsteil kann ohne weiteres an ortsfeste Speise- und Steuerleitungen angeschlossen werden.

Da die Verriegelungseinrichtung lediglich kurz nach dem Einfahren einer Fahrzeugkarosserie in die Drehvorrichtung und kurz vor dem Ausfahren einer Fahrzeugkarosserie aus der Drehvorrichtung betätigt werden muß, ist es günstig, wenn die Verriegelungseinrichtung eine Kupplung umfaßt, mittels welcher eine Wirkverbindung zwischen dem Verriegelungsteil und dem Antriebsteil vor dem Drehen der Fahrzeugkarosserie lösbar und nach dem Drehen der Fahrzeugkarosserie wieder herstellbar ist, so daß die Drehbewegung der Drehvorrichtung durch den Antrieb der Verriegelungseinrichtung in keiner Weise behindert wird.

Ferner ist es günstig, wenn die Reinigungsstation eine Abdeckung umfaßt, durch welche der Antriebsteil der Verriegelungseinrichtung vor dem zur Reinigung der Fahrzeugkarosserie verwendeten Naßmedium geschützt ist. Insbesondere können die Seitenwände einer Kabine, in welcher die Drehvorrichtung der Reinigungsstation untergebracht ist, als eine solche Abdeckung dienen.

Um die bei vorgegebener Taktzeit für jede Fahrzeugkarosserie zur Verfügung stehende Reinigungszeit zu verlängern, ist es von Vorteil, wenn die Drehvorrichtung zwei Aufnahmen für jeweils eine Fahrzeugkarosserie umfaßt. In diesem Fall können zwei Fahrzeugkarosserien gleichzeitig von derselben Drehvorrichtung in Reinigungsstellungen bewegt und gereinigt werden.

Bei einer bevorzugten Ausgestaltung der Erfindung ist vorgesehen, daß die beiden Aufnahmen für Fahrzeugkarosserien auf verschiedenen Seiten der Drehachse der Drehvorrichtung angeordnet sind. Dadurch ist es beispielsweise möglich, eine Fahrzeugkarosserie in die Drehvorrichtung einfahren oder aus derselben ausfahren zu lassen, während die zweite Fahrzeugkarosserie sich an der Drehvorrichtung in einer Reinigungsstellung befindet, in welcher diese Fahrzeugkarosserie gegenüber der Horizontalen, vorzugsweise um einen Winkel von 180°, gedreht ist.

Insbesondere kann vorgesehen sein, daß die beiden Aufnahmen für Fahrzeugkarosserien bezüglich der Drehachse im wesentlichen symmetrisch zueinander ausgebildet sind.

Um zu verhindern, daß die eine der beiden an der Drehvorrichtung aufgenommenen Fahrzeugkarosserien durch von der jeweils anderen Fahrzeugkarosserie abtropfendes Naßmedium verunreinigt wird, ist vorteilhafterweise vorgesehen, daß die beiden Aufnahmen für Fahrzeugkarosserien durch eine dazwischen angeordnete Trennwand voneinander getrennt sind.

Um eine gegenseitige Verschmutzung der Fahrzeugkarosserien durch ablaufendes Naßmedium zuverlässig zu verhindern, ist vorzugsweise vorgesehen, daß die Trennwand in der Längsrichtung der in den Aufnahmen aufgenommenen Fahrzeugkarosserien und quer zu dieser Längsrichtung über die in den Aufnahmen aufgenommenen Fahrzeugkarosserien übersteht.

Ferner ist es zum definierten Ableiten des auf die Trennwand gelangenden Naßmediums von Vorteil, wenn in der Trennwand Abflußrinnen ausgebildet sind, welche vorzugsweise im wesentlichen parallel zu der Längsrichtung der in den Aufnahmen aufgenommenen Fahrzeugkarosserien ausgerichtet sind.

Bislang wurden noch keine näheren Angaben dazu gemacht, in welcher Weise die Fahrzeugkarosserien auf die Drehvorrichtung gelangen.

Bei einer bevorzugten Ausgestaltung der erfindungsgemäßen Reinigungsstation ist vorgesehen, daß die Aufnahme der Drehvorrichtung eine Rollenbahn zum Transport von auf Skidrahmen angeordneten Fahrzeugkarosserien umfaßt, an welcher sich der Skidrahmen in einer Standardstellung der in der Aufnahme aufgenommenen Fahrzeugkarosserie abstützt.

Unter einer Standardstellung der Fahrzeugkarosserie ist dabei eine Stellung zu verstehen, in welcher Fensteröffnungen der Fahrzeugkarosserie oberhalb der Bodengruppe der Fahrzeugkarosserie angeordnet sind.

Ist vorteilhafterweise vorgesehen, daß die Aufnahme der Drehvorrichtung eine weitere Rollenbahn umfaßt, an welcher sich der Skidrahmen der in der Aufnahme aufgenommenen Fahrzeugkarosserie in einer Kopfüberstellung der Fahrzeugkarosserie abstützt, so kann mittels dieser weiteren Rollenbahn eine in der Standardstellung in die Drehvorrichtung eingefahrene Fahrzeugkarosserie in der Kopfüberstellung aus derselben ausgefahren werden. Umgekehrt ist es auch möglich, eine in der Kopfüberstellung in die Drehvorrichtung eingefahrene Fahrzeugkarosserie in der Standardstellung aus derselben auszufahren.

Unter einer Kopfüberstellung der Fahrzeugkarosserie ist dabei eine solche Stellung der Fahrzeugkarosserie zu verstehen, in welcher Fensteröffnungen der Fahrzeugkarosserie unterhalb der Bodengruppe der Fahrzeugkarosserie angeordnet sind.

Eine mit zwei Rollenbahnen je Aufnahme versehene Drehvorrichtung kann daher - neben ihrer Reinigungsfunktion - zusätzlich dazu benutzt werden, Fahrzeugkarosserien von der Standardstellung, welche diese Fahrzeugkarosserien beispielsweise beim Verlassen des Karosserierohbaus einnehmen, in die Kopfüberstellung zu überführen, in welcher die Fahrzeugkarosserien beispielsweise durch Tauchbäder in einer Beschichtungsanlage gefördert werden. Eine zusätzliche Drehstation zur Überführung der Fahrzeugkarosserien von der Standardstellung in die Kopfüberstellung kann dann entfallen.

Grundsätzlich kann vorgesehen sein, daß ein Antrieb für die Rollenbahn oder die Rollenbahnen der Drehvorrichtung an dem sich mit der Fahrzeugkarosserie mitdrehenden Teil der Drehvorrichtung angeordnet ist.

Dies hat jedoch zur Folge, daß elektrische Speise- und Steuerleitungen für den Rollenbahn-Antrieb bis zu dem sich mit der Fahrzeugkarosserie mitdrehenden Teil der Drehvorrichtung geführt werden müssen, was konstruktiv aufwendig ist und eine hohe Störanfälligkeit mit sich bringt. Außerdem muß ein an dem sich mit der Fahrzeugkarosserie mitdrehenden Teil der Drehvorrichtung angeordneter Rollenbahn-Antrieb durch geeignete Abdeckungen vor dem zur Reinigung der Fahrzeugkarosserien verwendeten Naßmedium geschützt werden.

Bei einer bevorzugten Ausgestaltung der erfindungsgemäßen Reinigungsstation ist daher vorgesehen, daß die Reinigungsstation einen Rollenbahn-Antriebsteil umfaßt, welcher sich nicht mit der Fahrzeugkarosserie mitdreht. Ein solcher Rollenbahn-Antriebsteil kann ohne weiteres mit ortsfesten elektrischen Speise- und Steuerleitungen verbunden werden.

Da die Rollenbahn oder die Rollenbahnen der Drehvorrichtung nur dann betätigt werden müssen, wenn eine Fahrzeugkarosserie auf die Drehvorrichtung einfahren oder von der Drehvorrichtung ausfahren soll, ist es von Vorteil, wenn die Reinigungsstation eine Kupplung umfaßt, mittels welcher eine Wirkverbindung zwischen der Rollenbahn und dem Rollenbahn-Antriebsteil vor dem Drehen der Fahrzeugkarosserie lösbar und nach dem Drehen der Fahrzeugkarosserie wieder herstellbar ist, um zu erreichen, daß die Drehbewegung der Drehvorrichtung durch den Rollenbahn-Antriebsteil nicht behindert wird.

Um den Rollenbahn-Antriebsteil mit einer Rollenbahn der Drehvorrichtung in Wirkverbindung bringen zu können, kann vorgesehen sein, daß der Rollenbahn-Antriebsteil einen auf einem verschiebbaren Verschiebeschlitten angeordneten Antriebsmotor umfaßt.

Besonders günstig ist es, wenn der Rollenbahn-Antriebsteil zwei auf synchron zueinander verschiebbaren Verschiebeschlitten angeordnete Antriebsmotoren umfaßt. Dadurch ist es möglich, zwei Rollenbahnen der Drehvorrichtung gleichzeitig mit jeweils einem Antriebsmotor des Rollenbahn-Antriebsteils zu koppeln, so daß diese beiden Rollenbahnen gleichzeitig und unabhängig voneinander betätigt werden können.

Insbesondere ist es in diesem Fall möglich, gleichzeitig eine erste Fahrzeugkarosserie in eine erste Aufnahme der Drehvorrichtung hineinzufördern und eine zweite Fahrzeugkarosserie aus einer zweiten Aufnahme der Drehvorrichtung herauszufördern.

Ferner ist es günstig, wenn die Reinigungsstation eine Abdeckung umfaßt, durch welche der Rollenbahn-Antriebsteil vor dem zur Reinigung der Fahrzeugkarosserie verwendeten Naßmedium geschützt ist.

Insbesondere kann vorgesehen sein, daß die Seitenwände einer Kabine, in welcher die Drehvorrichtung der Reinigungsstation angeordnet ist, als eine solche Abdeckung dienen.

Um das aus den zu reinigenden Fahrzeugkarosserien auslaufende oder von diesen Fahrzeugkarosserien abtropfende Naßmedium sammeln zu können, ist vorteilhafterweise vorgesehen, daß die Reinigungsstation eine unterhalb der Drehvorrichtung angeordnete Sammelwanne zum Auffangen des Naßmediums umfaßt.

Um das gesammelte Naßmedium einer Weiterbehandlung, beispielsweise einer Reinigung oder Entsorgung, zuführen zu können, ist es günstig, wenn der Boden der Sammelwanne ein Gefälle aufweist und eine Abflußöffnung an der tiefsten Stelle des Bodens angeordnet ist.

Sind die anfallenden Naßmedium-Mengen besonders groß, so ist es zum Abführen des gesammelten Naßmediums günstig, wenn der Boden der Sammelwanne in mehrere Teilbereiche unterteilt ist, welche jeweils eine eigene Abflußöffnung aufweisen.

Bei einer bevorzugten Ausgestaltung der erfindungsgemäßen Reinigungsstation ist vorgesehen, daß die Reinigungsstation ein Steuergerät umfaßt, welches die Drehvorrichtung so steuert, daß diese die Fahrzeugkarosserien in eine oder mehrere dem jeweiligen Fahrzeugkarosserietyp zugeordnete Reinigungsstellungen dreht, und eine Bewegungsvorrichtung für die mindestens eine bewegliche Sprüh- oder Spülvorrichtung so steuert, daß diese in die dem jeweiligen Fahrzeugkarosserietyp und der jeweiligen Reinigungsstellung zugeordnete Arbeitsstellung bewegt wird. Hierdurch wird erreicht, daß jede in die Reinigungsstation gelangende Fahrzeugkarosserie in die für den betreffenden Fahrzeugkarosserietyp günstigsten Reinigungsstellungen bewegt wird und daß die bewegliche Sprüh- oder Spülvorrichtung in die für den jeweiligen Fahrzeugkarosserietyp und die jeweilige Reinigungsstellung günstigste Arbeitsstellung gebracht wird.

Der Typ der jeweils zu reinigenden Fahrzeugkarosserie kann dabei dem Steuergerät durch eine Datenleitung oder mittels eines geeigneten Eingabegeräts eingegeben werden; alternativ hierzu ist es möglich, daß die Reinigungsstation einen Sensor aufweist, mittels dessen das Steuergerät den Typ der jeweils zu reinigenden Fahrzeugkarosserie selbsttätig erkennt und in Abhängigkeit von diesem Fahrzeugkarosserietyp die demselben zugeordneten Reinigungsstellungen und Arbeitsstellungen der Sprüh- oder Spülvorrichtung einstellt.

Insbesondere kann vorgesehen sein, daß die Fahrzeugkarosserien und/oder die dieselben tragenden Skidrahmen mit einem Identifikationssystem versehen sind, in welchem unter anderem Angaben zum Karosserietyp gespeichert sind, und daß die in dem Identifikationssystem enthaltenen Angaben zum Karosserietyp von dem Steuergerät mittels des Sensors ausgelesen werden.

Die mit dem Naßmedium in Kontakt kommenden Elemente der Reinigungsstation werden vorzugsweise aus korrosionsbeständigem Material, beispielsweise aus Edelstahl, hergestellt.

Der vorliegenden Erfindung liegt die weitere Aufgabe zugrunde, ein Verfahren zum Reinigen von Fahrzeugkarosserien der eingangs genannten Art zu schaffen, das es ermöglicht, ein gutes Reinigungsergebnis auch an schwer zugänglichen Bereichen der zu reinigenden Fahrzeugkarosserien zu erzielen.

Diese Aufgabe wird bei einem Verfahren mit den Merkmalen des Oberbegriffs von Anspruch 33 erfindungsgemäß dadurch gelöst, daß mindestens eine bewegliche Spülvorrichtung bei in der Reinigungsstellung befindlicher Fahrzeugkarosserie in eine der Reinigungsstellung zugeordnete Arbeitsstellung bewegt wird, in welcher die Spülvorrichtung an einer Eingangsöffnung eines Hohlraums der Fahrzeugkarosserie angeordnet ist, und der betreffende Hohlraum durchspült wird.

Besondere Ausgestaltungen des erfindungsgemäßen Verfahrens sind Gegenstand der Ansprüche 34 bis 57, deren Vorteile bereits vorstehend im Zusammenhang mit den besonderen Ausgestaltungen der erfindungsgemäßen Reinigungsstation erläutert worden sind.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine perspektivische Darstellung einer ersten Ausführungsform einer Reinigungsstation mit zwei an einer Drehvorrichtung der Reinigungsstation aufgenommenen Fahrzeugkarosserien, welche gemeinsam in Reinigungsstellungen gedreht werden und sich in einer Zwischenstellung befinden, in der die Fahrzeugkarosserien gegenüber der Horizontalen um 45° bzw. um 135° gedreht sind;
- Fig. 2: eine perspektivische Darstellung der Reinigungsstation aus Fig. 1, wobei sich die Fahrzeugkarosserien in Reinigungsstellungen befinden, in denen die Fahrzeugkarosserien gegenüber der Horizontalen um 90° bzw. 270° gedreht sind;
- Fig. 3: eine perspektivische Darstellung der Reinigungestation aus den Fig. 1 und 2, wobei eine der Fahrzeugkarosserien aus der Drehvorrichtung der Reinigungsstation auf eine Abführ-Rollenbahn gefördert wird und sich die zweite Fahrzeugkarosserie in einer Reinigungsstellung befindet, in welcher diese Fahrzeugkarosserie gegenüber der Horizontalen um einen Winkel von 180° gedreht ist;

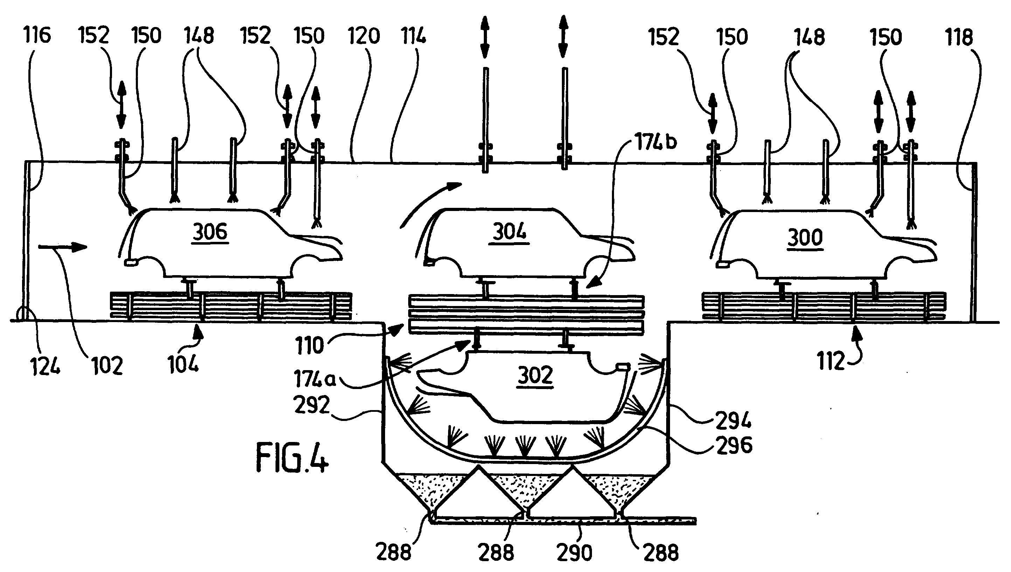

- Fig. 4: eine schematische Seitenansicht der ersten Ausführungsform einer Reinigungsstation, bei welcher die Fahrzeugkarosserien in Standardstellung von einer Zuführ-Rollenbahn auf die Drehvorrichtung und in Standardstellung von der Drehvorrichtung auf eine Abführ-Rollenbahn gefördert werden, in einem ersten Betriebszustand, in dem sich eine erste Fahrzeugkarosserie auf der Abführ-Rollenbahn befindet, eine zweite Karosserie an der Drehvorrichtung in einer unteren Reinigungsstellung angeordnet ist, in welcher die Fahrzeugkarosserie gegenüber der Horizontalen um einen Winkel von 180° gedreht ist, eine dritte Fahrzeugkarosserie an der Drehvorrichtung in einer Ausgangsstellung angeordnet ist und eine vierte Fahrzeugkarosserie sich auf der Zuführ-Rollenbahn befindet;

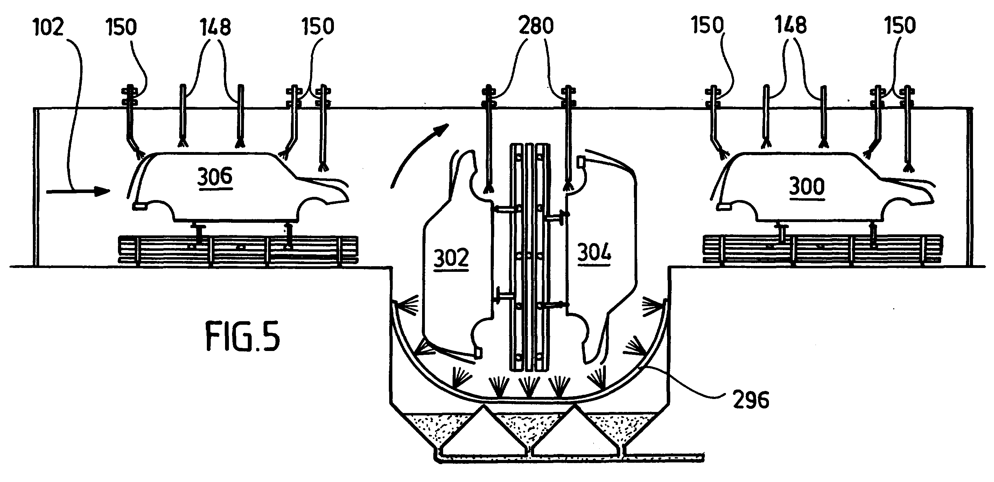

- Fig. 5: eine schematische Seitenansicht der Reinigungsstation aus Fig. 4 in einem Betriebszustand, in dem sich die erste Fahrzeugkarosserie auf der Abführ-Rollenbahn befindet, die zweite Fahrzeugkarosserie an der Drehvorrichtung in einer seitlichen Reinigungsstellung angeordnet ist, in welcher die zweite Fahrzeugkarosserie gegenüber der Horizontalen um einen Winkel von 270° gedreht ist, die dritte Fahrzeugkarosserie an der Drehvorrichtung in einer seitlichen Reinigungsstellung angeordnet ist, in welcher die dritte Fahrzeugkarosserie gegenüber der Horizontalen um einen Winkel von 90° gedreht ist, und die vierte Fahrzeugkarosserie sich auf der Zuführ-Rollenbahn befindet;
- Fig. 6: eine schematische Seitenansicht der Reinigungsstation aus den Fig. 4 und 5 in einem Betriebszustand, in welchem die erste Fahrzeugkarosserie sich auf der Abführ-Rollenbahn befindet, die zweite Fahrzeugkarosserie an der Drehvorrichtung in der Ausgangsstellung angeordnet ist, die dritte Fahrzeugkarosserie an der Drehvorrichtung in einer unteren Reinigungsstellung angeordnet ist, in welcher die dritte Fahrzeugkarosserie gegenüber der Horizontalen um 180° gedreht ist, und die vierte Fahrzeugkarosserie sich auf der Zuführ-Rollenbahn befindet;

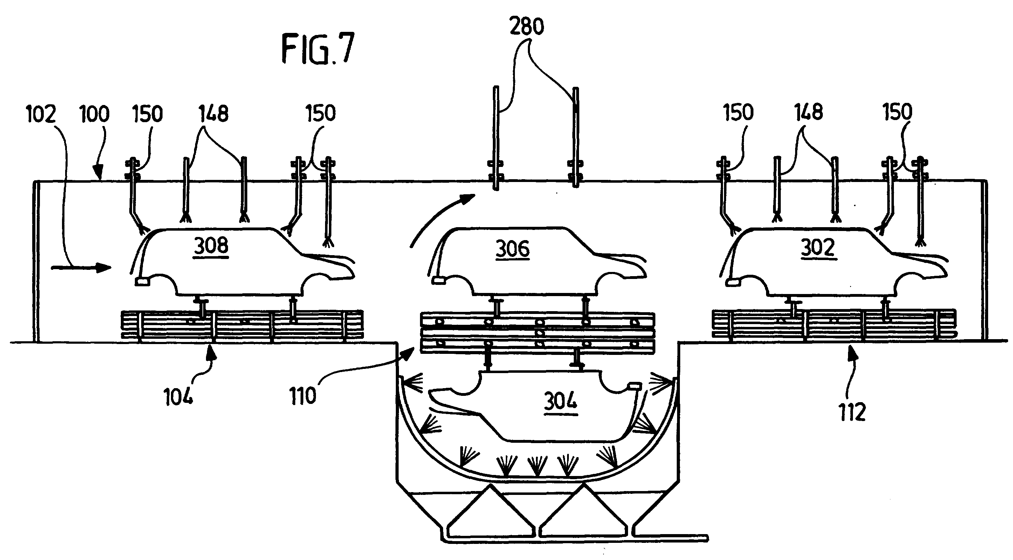

- Fig. 7: eine schematische Seitenansicht der Reinigungsstation aus den Fig. 4 bis 6 in einem Betriebszustand, in dem die erste Fahrzeugkarosserie von der Abführ-Rollenbahn aus weiter gefördert worden ist, die zweite Fahrzeugkarosserie auf die Abführ-Rollenbahn gefördert worden ist, die dritte Fahrzeugkarosserie an der Drehvorrichtung in einer unteren Reinigungsstellung angeordnet ist, in welcher die dritte Fahrzeugkarosserie um einen Winkel von 180° gegenüber der Horizontalen gedreht ist, die vierte Fahrzeugkarosserie auf die Drehvorrichtung gefördert worden ist und sich dort in der Ausgangsstellung befindet und eine fünfte Fahrzeugkarosserie auf die Zuführ-Rollenbahn gefördert worden ist;

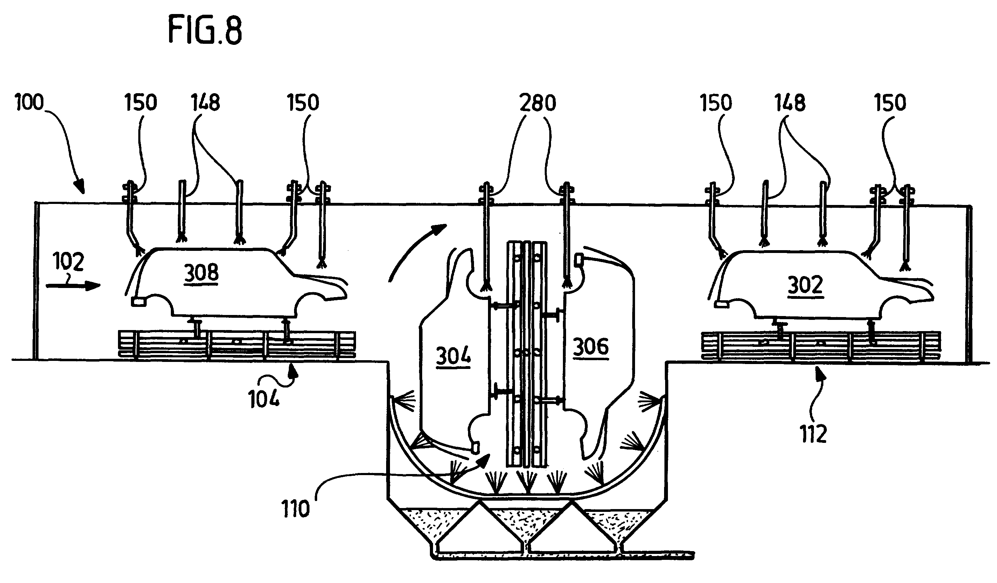

- Fig. 8: eine schematische Seitenansicht der Reinigungsstation aus den Fig. 4 bis 7 in einem Betriebszustand, in dem die zweite Fahrzeugkarosserie sich auf der Abführ-Rollenbahn befindet, die dritte Fahrzeugkarosserie an der Drehvorrichtung in einer seitlichen Reinigungsstellung angeordnet ist, in welcher die dritte Fahrzeugkarosserie gegenüber der Horizontalen um einen Winkel von 270° gedreht ist, die vierte Fahrzeugkarosserie an der Drehvorrichtung in einer seitlichen Reinigungsstellung angeordnet ist, in welcher die vierte Fahrzeugkarosserie gegenüber der Horizontalen um einen Winkel von 90° gedreht ist, und die fünfte Fahrzeugkarosserie sich auf der Zuführ-Rollenbahn befindet;
- Fig. 9: eine schematische Seitenansicht der Reinigungsstation aus den Fig. 4 bis 8 in einem Betriebszustand, in dem die zweite Fahrzeugkarosserie sich auf der Abführ-Rollenbahn befindet, die dritte Fahrzeugkarosserie an der Drehvorrichtung in der Ausgangsstellung angeordnet ist, die vierte Fahrzeugkarosserie an der Drehvorrichtung in einer unteren Reinigungsstellung angeordnet ist, in welcher die vierte Fahrzeugkarosserie gegenüber der Horizontalen um einen Winkel von 180° gedreht ist, und die fünfte Fahrzeugkarosserie sich auf der Zuführ-Rollenbahn befindet;
- Fig. 10: einen schematischen Querschnitt durch die Drehvorrichtung der Reinigungsstation aus den Fig. 1 bis 9 in einem der Fig. 6 entsprechenden Betriebszustand;
- Fig. 11: einen vergrößerten Ausschnitt aus der Fig. 10, welcher an der Drehvorrichtung angeordnete Rollenbahnen im einzelnen darstellt;
- Fig. 12: einen Längsschnitt durch eine Kupplung, welche eine der Rollenbahnen mit einem externen Rollenbahn-Antriebsteil verbindet;
- Fig. 13: einen Querschnitt durch die Kupplung aus Fig. 12 längs der Linie 13-13 in Fig. 12;
- Fig. 14: eine schematische Draufsicht auf die Drehvorrichtung der Reinigungsstation aus den Fig. 1 bis 13;
- Fig. 15: eine schematische Draufsicht auf eine Rollenbahn der Drehvorrichtung aus Fig. 14 mit einem darauf angeordneten Skidrahmen;
- Fig. 16: eine schematische Draufsicht auf die Rollenbahn aus Fig. 15 ohne Skidrahmen;
- Fig. 17: eine schematische Seitenansicht der Rollenbahn aus Fig. 15 mit einem darauf angeordneten Skidrahmen;

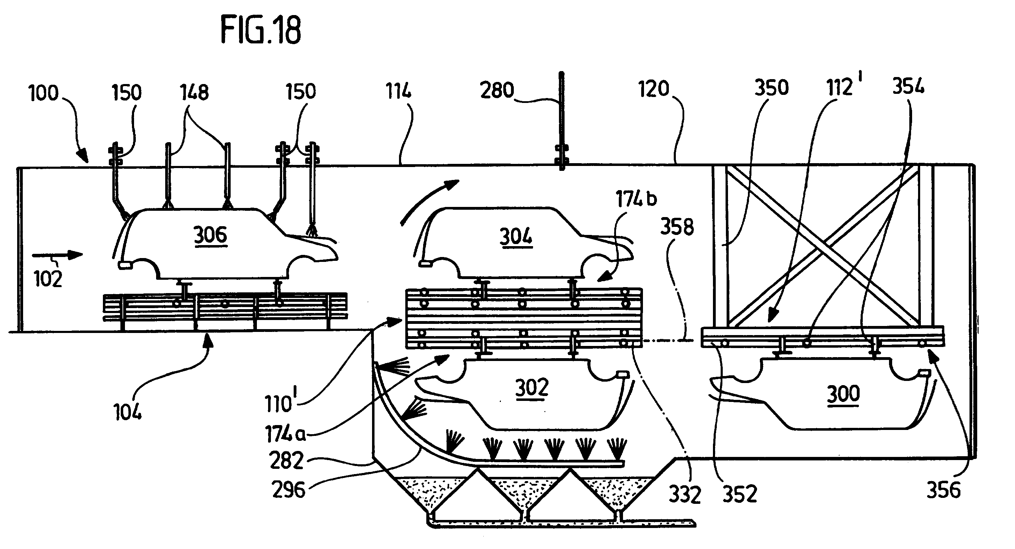

- Fig. 18: eine schematische Seitenansicht einer zweiten Ausführungsform einer Reinigungsstation, bei welcher die Fahrzeugkarosserien in Standardstellung von einer Zuführ-Rollenbahn auf die Drehvorrichtung und in Kopfüberstellung von der Drehvorrichtung auf eine Abführ-Rollenbahn gefördert werden, in einem Betriebszustand, in welchem eine erste Fahrzeugkarosserie in Kopfüberstellung an der Abführ-Rollenbahn angeordnet ist, eine zweite Fahrzeugkarosserien an der Drehvorrichtung in einer Reinigungsstellung angeordnet ist, in welcher die zweite Fahrzeugkarosserie gegenüber der Horizontalen um einen Winkel von 180° gedreht ist, eine dritte Fahrzeugkarosserie an der Drehvorrichtung in einer Ausgangsstellung angeordnet ist und eine vierte Fahrzeugkarosserie sich auf der Zuführ-Rollenbahn befindet;
- Fig. 19: eine schematische Seitenansicht der Reinigungsstation aus Fig. 18 in einem Betriebszustand, in dem die erste Fahrzeugkarosserie von der Abführ-Rollenbahn aus weitergefördert worden ist, die zweite Fahrzeugkarosserie auf die Abführ-Rollenbahn gefördert worden ist, die dritte Fahrzeugkarosserie an der Drehvorrichtung in einer seitlichen Reinigungsstellung angeordnet ist, in welcher die dritte Fahrzeugkarosserie um einen Winkel von 90° gegenüber der Horizontalen gedreht ist und die vierte Fahrzeugkarosserie sich auf der Zuführ-Rollenbahn befindet;

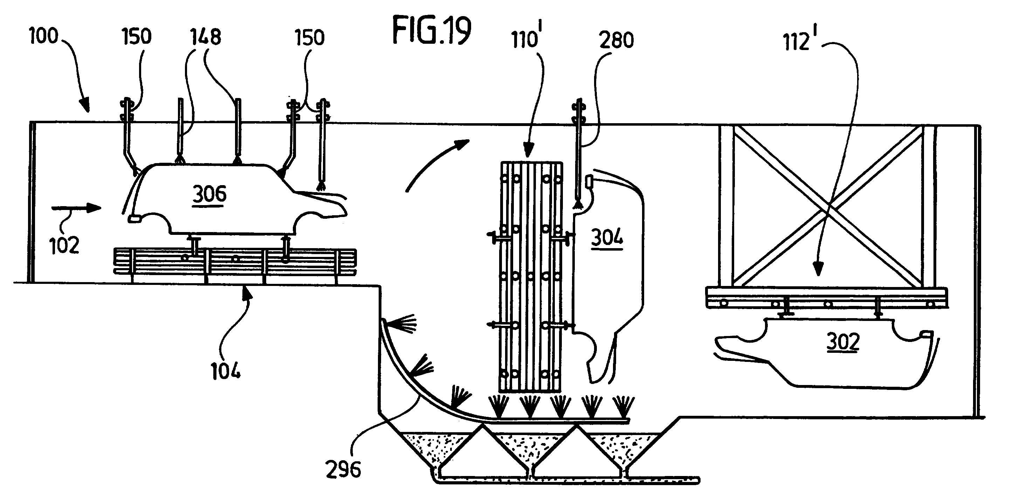

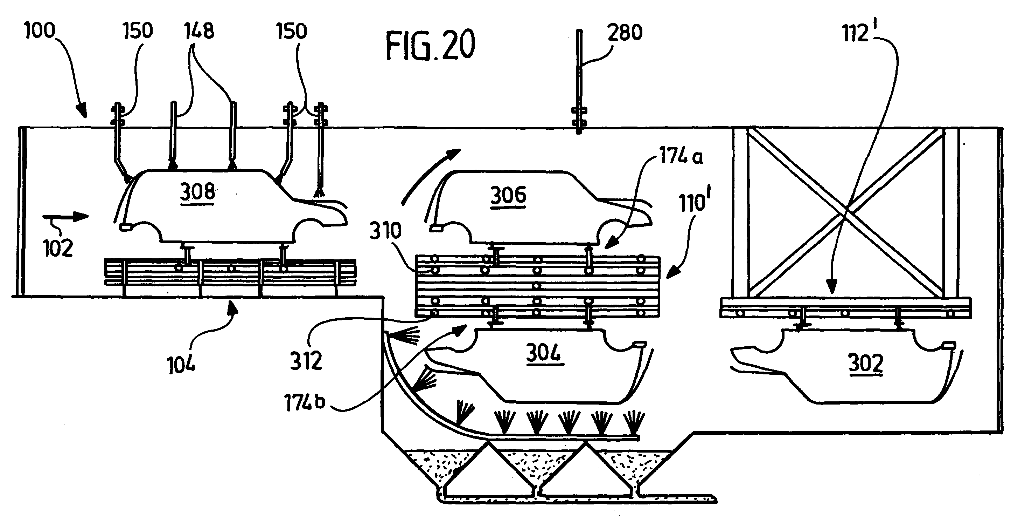

- Fig. 20: eine schematische Seitenansicht der Reinigungsstation aus den Fig. 18 und 19 in einem Betriebszustand, in dem die zweite Fahrzeugkarosserie an der Abführ-Rollenbahn angeordnet ist, die dritte Fahrzeugkarosserie an der Drehvorrichtung in einer unteren Reinigungsstellung angeordnet ist, in welcher die dritte Fahrzeugkarosserie gegenüber der Horizontalen um einen Winkel von 180° gedreht ist, die vierte Fahrzeugkarosserie auf die Drehvorrichtung gefördert worden ist und sich dort in der Ausgangsstellung befindet und eine fünfte Fahrzeugkarosserie auf die Zuführ-Rollenbahn gefördert worden ist;
- Fig. 21: einen schematischen Querschnitt durch die Drehvorrichtung der Reinigungsstation aus den Fig. 18 und 19;
- Fig. 22: einen vergrößerten Ausschnitt aus Fig. 21, welcher die an der Drehvorrichtung angeordneten Rollenbahnen im einzelnen darstellt; und
- Fig. 23: einen schematischen Querschnitt durch einen bei der zweiten Ausführungsform der Reinigungsstation verwendeten Skidrahmen.

Gleiche oder funktional äquivalente Elemente sind in allen Figuren mit denselben Bezugszeichen bezeichnet.

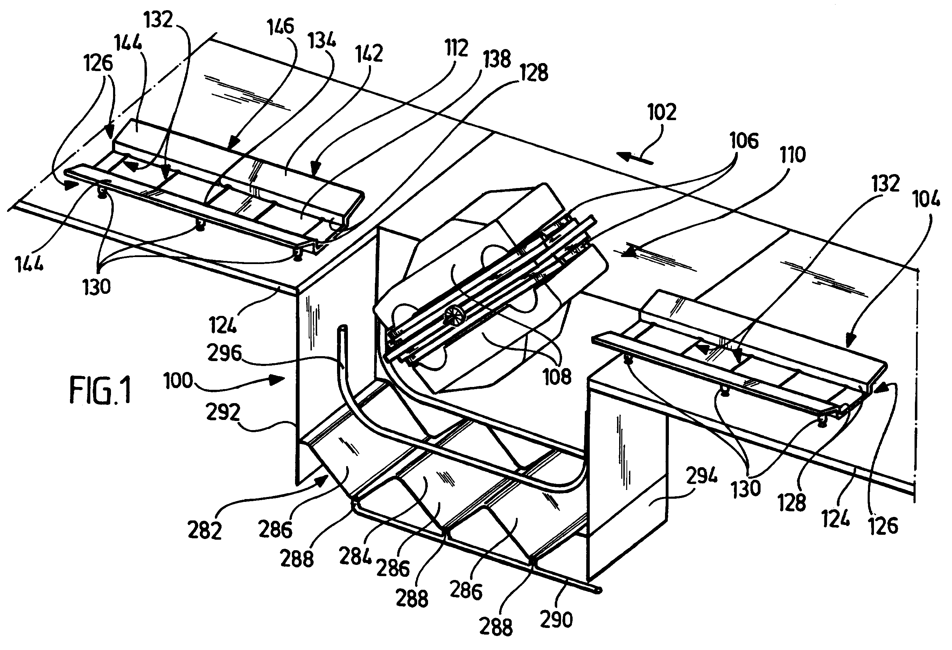

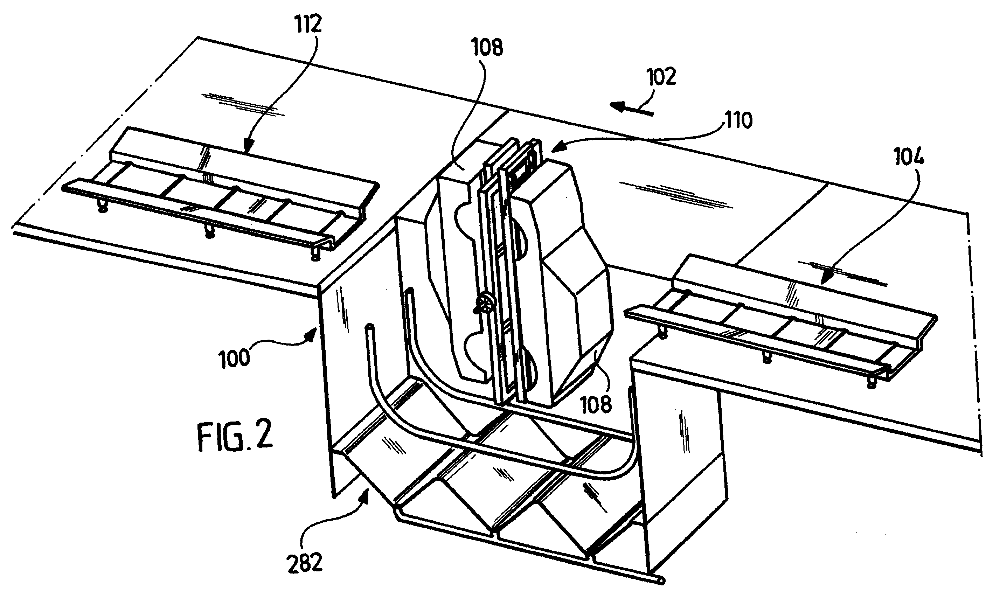

Ein in den Fig. 1 bis 17 dargestellte, als Ganzes mit 100 bezeichnete erste Ausführungsform einer Reinigungsstation für Fahrzeugkarosserien umfaßt eine eingangsseitige Zuführ-Rollenbahn 104 zum horizontalen Transport von an Skidrahmen 106 angeordneten Fahrzeugkarosserien 108 längs der Förderrichtung 102, das heißt in der Darstellung der Fig. 4 bis 9 von links nach rechts, wobei sich die Fahrzeugkarosserien 108 in einer Standardstellung befinden, in welcher Fensteröffnungen der Fahrzeugkarosserien 108 oberhalb der Bodengruppe der Fahrzeugkarosserien 108 angeordnet sind.

In der Förderrichtung 102 schließt sich an die eingangsseitige Zuführ-Rollenbahn 104 eine Drehvorrichtung 110 an, welche dazu dient, die Fahrzeugkarosserien 108 durch Drehung um der Drehvorrichtung 110 durch ein (nicht dargestelltes) Steuergerät vorgegebene Drehwinkel in fahrzeugkarosserietyp-abhängige Reinigungsstellungen zu überführen.

Längs der Förderrichtung 102 schließt sich an die Drehvorrichtung 110 eine ausgangsseitige Abführ-Rollenbahn 112 an, auf welche die Fahrzeugkarosserien 108 von der Drehvorrichtung 110 aus gefördert werden und von wo aus die Fahrzeugkarosserien 108 zur Weiterbehandlung, beispielsweise in einem Vorbehandlungs- oder Tauchlackierbad, weitergefördert werden.

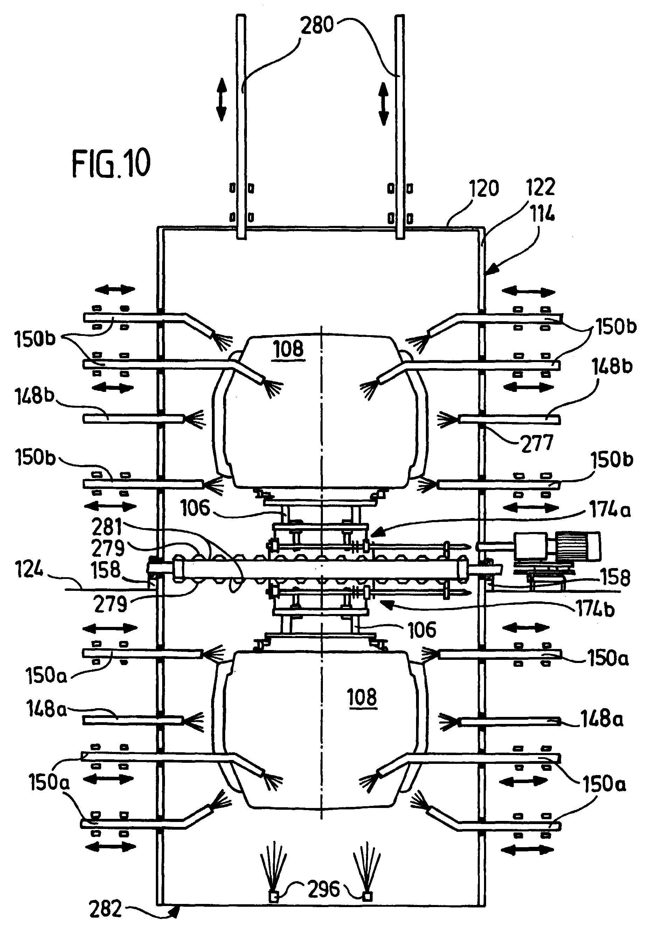

Die Zuführ-Rollenbahn 104, die Drehvorrichtung 110 und die Abführ-Rollenbahn 112 sind zusammen in einer Kabine 114 untergebracht (siehe Fig. 4), welche eine Vorderwand 116 mit einer Eintrittsöffnung für die Fahrzeugkarosserien 108, eine Rückwand 118 mit einer Austrittsöffnung für die Fahrzeugkarosserien 108, eine Deckenwand 120 und Seitenwände 122 (siehe Fig. 10) aufweist und auf einem im wesentlichen ebenen Untergrund 124 angeordnet ist.

Die Zuführ-Rollenbahn 104 und die Abführ-Rollenbahn 112 umfassen, wie am besten aus den Fig. 1 bis 3 zu ersehen ist, ein sich längs der Förderrichtung 102 erstreckendes, im wesentlichen rechteckiges Gestell 126 mit zwei senkrecht zur Förderrichtung 102 voneinander beabstandeten Längsträgern 128 und Stützfüßen 130, mit denen sich das jeweilige Gestell 126 an dem Untergrund 124 abstützt.

In dem Gestell 126 sind in der Förderrichtung 102 hintereinander jeweils mehrere Tragrollen 132 drehbar gelagert, auf denen zylindrische Tragkörper 134 angeordnet sind, deren obere Tragkörperkuppen eine im wesentlichen ebene Stützfläche für die Skidkufen 136 der Skidrahmen 106 bilden.

Aufgrund der Reibung zwischen den Skidkufen 136 und den Tragkörpern 134 werden die Skidrahmen 106 längs der Förderrichtung 102 vorwärtsbewegt, wenn sich die Tragrollen 132 mit den daran angeordneten Tragkörpern 134 drehen. Die Tragrollen 132 der Rollenbahnen 104, 112 werden dabei in an sich bekannter Weise von (nicht dargestellten) elektrischen Getriebemotoren mittels Zahnriemen-Übertrieben angetrieben.

Wie ferner aus den Fig. 1 bis 3 zu ersehen ist, sind die Rollenbahnen 104, 112 mit jeweils einer integrierten Auffangwanne 138 versehen, welche an dem Gestell 126 gehalten ist und sich in der Förderrichtung 102 über die gesamte Lange der betreffenden Rollenbahn 104, 112 und quer zur Förderrichtung 102 vom einen der Längsträger 128 zum jeweils anderen erstreckt. Der Boden 140 jeder Auffangwanne 138 ist geneigt und mit mehreren (nicht dargestellten) Abflußöffnungen versehen, an welche eine (ebenfalls nicht dargestellte) Naßmedium-Abführleitung angeschlossen ist.

Ferner umfaßt jede der Rollenbahnen 104, 112 Abtropfelemente 142 in Form von Ableitblechen 144, welche zu beiden Seiten der Längsmittelebene der betreffenden Rollenbahn 104, 112 angeordnet und zu der Auffangwanne 138 hin geneigt sind, so daß Naßmedium von den Ableitblechen 144 in die Auffangwanne 138 abfließen kann.

Die Abtropfelemente 142 und die Auffangwanne 138 jeder der Rollenbahnen 104, 112 bilden zusammen ein Auffangsystem 146 für das Naßmedium, welches aus dem Bereich oberhalb der jeweiligen Rollenbahn zu der Rollenbahn gelangt.

Wie aus den Fig. 4 bis 9 zu ersehen ist, sind im Bereich oberhalb der Rollenbahnen 104, 112 jeweils stationäre Sprühlanzen 148 und bewegliche Sprühlanzen 150 an der Deckenwand 120 der Kabine 114 angeordnet.

Weitere (nicht dargestellte) stationäre oder bewegliche Sprühlanzen können in den Seitenwänden 122 beiderseits der Rollenbahnen 104, 112 angeordnet sein.

Jede der Sprühlanzen 148, 150 ist als starres Rohr ausgebildet, welches an einem außerhalb der Kabine 114 liegenden Ende an eine Naßmedium-Zufuhr angeschlossen ist und an dem entgegengesetzten, innerhalb der Kabine 114 angeordneten Ende mit einer mit Durchtrittsöffnungen für das Naßmedium versehenen Zerstäuberplatte verschlossen ist. Diese Rohre können geradlinig ausgebildet oder mit Krümmungen versehen sein. Das mit der Zerstäuberplatte versehene Ende kann konisch zulaufend ausgebildet sein.

Wie aus den Fig. 4 bis 9 zu ersehen ist, sind die stationären Sprühlanzen 148 so angeordnet, daß sie sich vollständig außerhalb der Bahn der Fahrzeugkarosserien 108 befinden.

Die beweglichen Sprühlanzen 150 liegen jedoch in ihrer jeweiligen Arbeitsstellung innerhalb des von den Fahrzeugkarosserien 108 bei deren Bewegung durch die Kabine 114 überstrichenen Bereich. Diese beweglichen Sprühlanzen 150 sind daher mit jeweils einer (nicht dargestellten) elektromotorischen, pneumatischen oder hydraulischen Bewegungseinrichtung versehen, mittels derer diese Sprühlanzen 150 längs der Richtung der Pfeile 152 aus der Bahn der Fahrzeugkarosserien 108 herausbewegt bzw. nach abgeschlossenem Transport der Fahrzeugkarosserien 108 wieder in die Arbeitsstellung zurückbewegt werden können.

Die Sprühlanzen 148, 150, die oberhalb der Rollenbahnen 104, 112 angeordnet sind, dienen der Außenreinigung der Fahrzeugkarosserien 108. Das von diesen Sprühlanzen versprühte und direkt zu der jeweiligen Rollenbahn 104, 112 gelangende oder von den Fahrzeugkarosserien 108 abtropfende Naßmedium wird entweder direkt von der jeweiligen Auffangwanne 138 aufgefangen oder aber von den Ableitblechen 144 aufgefangen und in die Auffangwanne 138 weitergeleitet, von wo das Naßmedium durch die Naßmedium-Abführleitung abfließt und einer Weiterbehandlung, beispielsweise einer Reinigung oder Entsorgung, zugeführt wird.

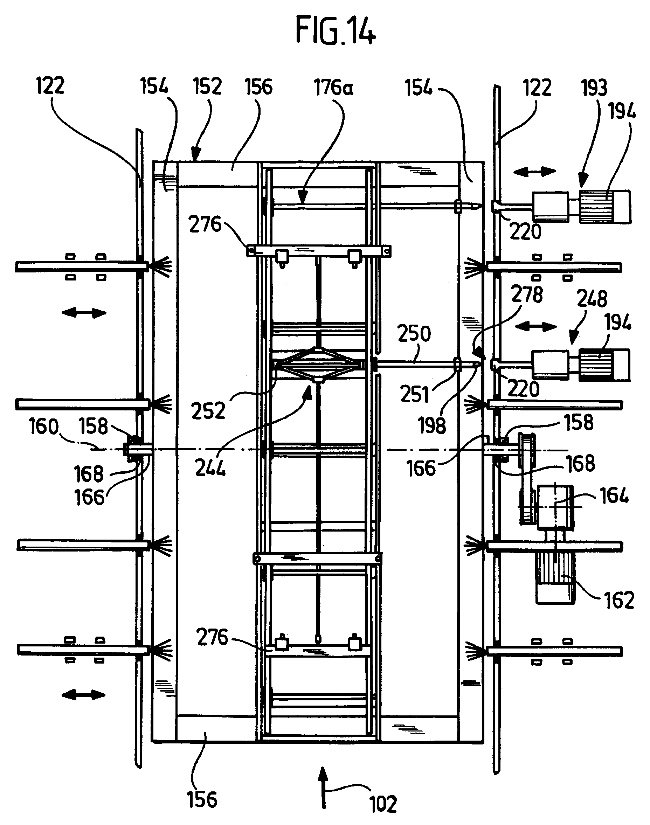

Die zwischen der Zuführ-Rollenbahn 104 und der Abführ-Rollenbahn 112 angeordnete Drehvorrichtung 110 umfaßt, wie am besten aus Fig. 14 zu ersehen ist, einen rechteckigen Drehrahmen 152 mit zwei parallel zur Förderrichtung 102 ausgerichteten Längsträgern 154, welche mittels zweier Querträger 156 miteinander verbunden sind.

Der Drehrahmen 152 ist an zwei Lagerböcken 158 um eine senkrecht zur Förderrichtung 102 ausgerichtete horizontale Drehachse 160 drehbar gelagert. Die Lagerböcke 158 ruhen auf dem Untergrund 124, welcher auch die Kabine 114 trägt.

Der Antrieb der Drehbewegung des Drehrahmens 152 um die Drehachse 160 erfolgt mittels eines in Fig. 14 schematisch dargestellten Drehantriebsmotors 162, welcher über ein Getriebe 164 die in den Lagerböcken 158 gelagerte Welle 166 des Drehrahmens 152 dreht.

Die Welle 166 ist zu beiden Seiten des Drehrahmens 152 durch die jeweilige Seitenwand 122 der Kabine 114 hindurchgeführt, so daß die Seitenwände 122 der Kabine 114 als Abdeckungen dienen, durch welche der Drehantriebsmotor 162, das Getriebe 164 und die Lagerböcke 158 vor dem zur Reinigung der Fahrzeugkarosserien 108 verwendeten Naßmedium geschützt sind.

Wie aus den Fig. 10 und 14 zu ersehen ist, sind die Durchtrittsöffnungen in den Seitenwänden 122, welche von der Welle 166 durchsetzt werden, mittels elastischer Dichtungen 168 abgedichtet.

An der Oberseite und an der Unterseite des Drehrahmens 152 ist jeweils eine Aufnahme 174a bzw. 174b für eine auf einem Skidrahmen 106 angeordnete Fahrzeugkarosserie 108 vorgesehen.

Die beiden Aufnahmen 174a, 174b sind bezüglich einer die Drehachse 160 und die Längsrichtung des Drehrahmens 152 enthaltenden Ebene spiegelsymmetrisch zueinander ausgebildet, so daß im folgenden nur die in Fig. 10 oben dargestellte erste Aufnahme 174a im Detail beschrieben werden wird.

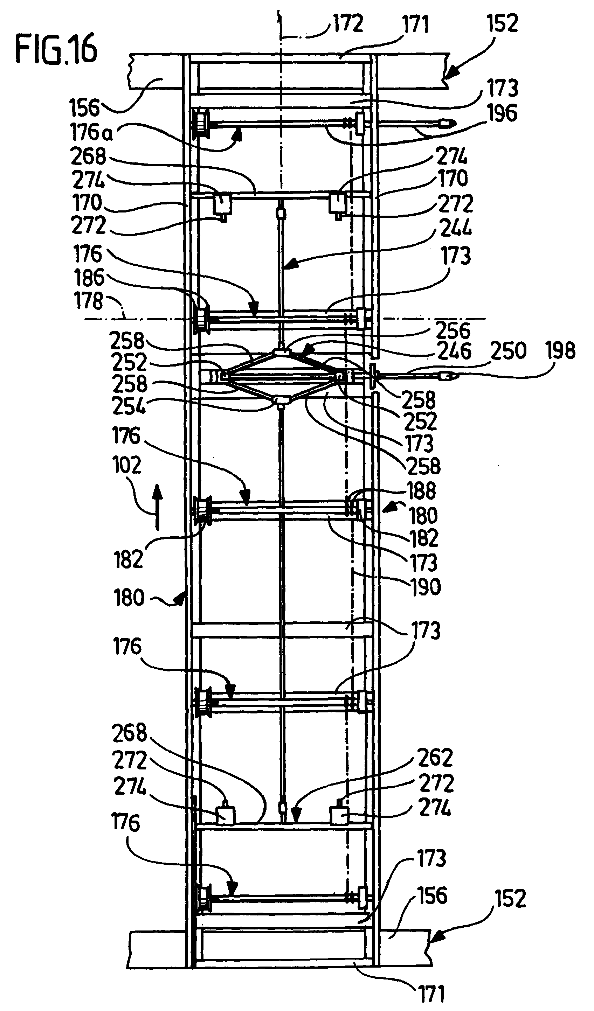

Wie am besten aus Fig. 16 zu ersehen ist, tragen die Querträger 156 des Drehrahmens 152 zwei Längsrahmenträger 170 mit Z-förmigem Profil, welche sich parallel zur Förderrichtung 102 erstrecken und bezüglich einer Längsmittelebene 172 des Drehrahmens 152 symmetrisch zueinander ausgebildet sind.

Die Längsrahmenträger 170 sind an ihren vorderen und hinteren Enden mittels Endblechen 171 sowie durch zwischen den Endblechen 171 angeordnete, sich quer zur Längsrichtung der Längsrahmenträger 170 von dem einen Längsrahmenträger 170 zu dem anderen Längsrahmenträger 170 erstreckende Querstreben 173 mit U-förmigem oder C-förmigem Querschnitt verbunden.

An den Längsrahmenträgern 170 sind in der Längsrichtung derselben voneinander beabstandete Tragrollen 176 um senkrecht zur Förderrichtung 102 ausgerichtete horizontale Drehachsen 178 drehbar gelagert.

Die mehreren, beispielsweise fünf, Tragrollen 176, die äquidistant längs der Förderrichtung 102 angeordnet sind, bilden zusammen eine Rollenbahn 180 der Aufnahme 174a der Drehvorrichtung 110.

Wie aus Fig. 16 zu ersehen ist, umfaßt jede der Tragrollen 176 symmetrisch zur Längsmittelebene 172 angeordnete zylindrische Tragkörper 182, deren obere Tragkörperkuppen zusammen eine Stützfläche 184 für einen Skidrahmen 106 bilden.

Die (in der Förderrichtung 102 gesehen) links von der Längsmittelebene 172 angeordneten Tragkörper 182 sind mit Spurkränzen 186 zur seitlichen Führung der betreffenden Skidkufe 136 eines Skidrahmens 106 versehen.

Ferner trägt jede der Tragrollen 176, dem jeweiligen spurkranzlosen Tragkörper benachbart, zwei Zahnräder 188. Über jeweils ein Zahnrad 188 zweier einander benachbarter Tragrollen 176 ist jeweils eine Kette 190 gespannt, so daß die Zahnräder 188 und Ketten 190 zusammen einen Kettenübertrieb bilden, durch welchen die Drehung einer Tragrolle 176 auf die jeweils benachbarte Tragrolle 176 übertragen wird.

Eine der Tragrollen 176, beispielsweise die in der Förderrichtung 102 am weitesten hinten liegende Tragrolle 176a, wird mittels einer Kupplung 192 von einem elektrischen Getriebemotor 194 eines externen Rollenbahn-Antriebsteils 193 in Drehung versetzt.

Zu diesem Zweck ist die Welle 196 der Tragrolle 176a so verlängert, daß sie über den (in der Förderrichtung 102 gesehen) rechten Längsrahmenträger 170 zu der rechten Seitenwand 122 der Kabine 114 hin übersteht. Dieser überstehende Teil der Welle 196 ist in einer vom rechten Querträger 154 des Drehrahmens 152 getragenen Stütze 197 drehbar gelagert.

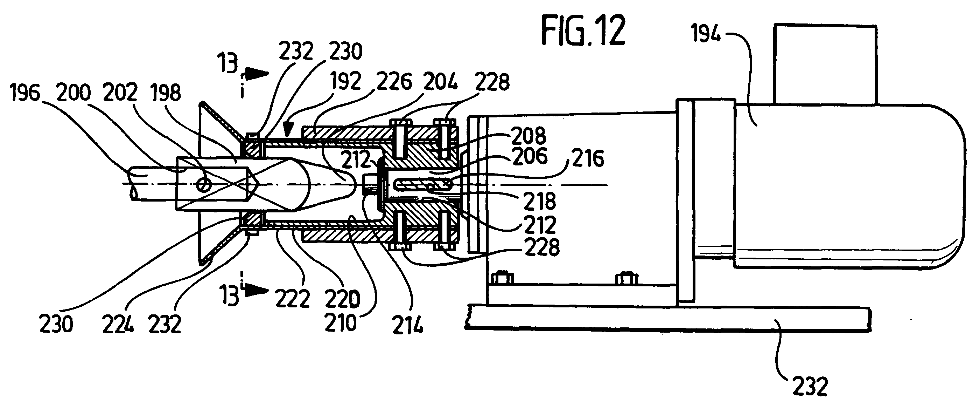

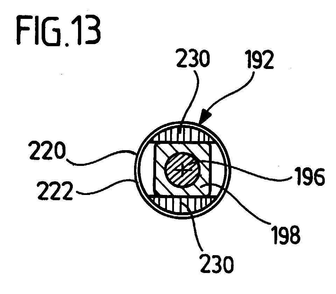

Wie am besten aus den Fig. 12 und 13 zu ersehen ist, ist auf das freie Ende der Welle 196, welche einen kreisförmigen Querschnitt aufweist, ein im Querschnitt quadratischer Mitnahmebolzen 198 aufgeschoben, welcher an einer Stirnseite ein Sackloch 200 zur Aufnahme des freien Endes der Welle 196 aufweist.

Der Mitnahmebolzen 198 ist mittels eines in ein radial zu der Welle 196 verlaufendes Gewinde-Durchgangsloch des Mitnahmebolzens 198 eingeschraubten Gewindestifts 202 drehfest an der Welle 196 festgelegt.

Ein der Welle 196 abgewandtes Stirnende des Mitnahmebolzens 198 ist sich konisch verjüngend ausgebildet und mit einer gerundeten Spitze 204 versehen.

Der Mitnahmebolzen 198 und die Welle 196 bilden einen rollenbahnseitigen ersten Teil der Kupplung 192.

Ein antriebsteilseitiger zweiter Teil der Kupplung 192 ist drehfest mit einer Abtriebswelle 206 des Getriebemotors 194 verbunden.

Wie aus Fig. 12 zu ersehen ist, ist auf die Abtriebswelle 206 ein zylindrischer Innenring 208 mit einem gestuften axialen Durchgangsloch 210, dessen engerer, dem Getriebemotor 194 zugewandter Abschnitt 212 die Abtriebswelle 206 aufnimmt, aufgeschoben und mittels einer Stützscheibe 212 und einer die Stützscheibe 212 gegen die Schulter des gestuften Durchgangslochs 210 pressenden Zylinderkopfschraube 214, welche in ein stirnseitiges axiales Gewinde-Sackloch der Abtriebswelle 206 eingeschraubt ist, in axialer Richtung relativ zu der Abtriebswelle 206 fixiert. Eine drehfeste Verbindung zwischen der Abtriebswelle 206 und dem Innenring 208 wird mittels einer Paßfeder 216 hergestellt, welche in eine axial ausgerichtete Nut 218 am Umfang der Abtriebswelle 206 und eine hieran angrenzende axiale Nut an der Innenseite des engen Bereichs des gestuften Durchgangslochs 210 des Innenrings 208 eingreift. Diese (nicht dargestellte) Nut an dem Innenring 208 erstreckt sich in axialer Richtung des Innenrings 208 bis zu dessen dem Getriebemotor 194 zugewandter Stirnseite, damit der Innenring 208 bei in die Nut 218 der Abtriebswelle 206 eingesetzter Paßfeder 216 auf die Abtriebswelle 206 aufgeschoben werden kann.

Auf den Innenring 208 ist eine Aufnahmebuchse 220 aufgeschoben, welche einen dem Getriebemotor 194 zugewandten hohlzylindrischen Abschnitt 222 und einen dem Getriebemotor 194 abgewandten, sich konisch erweiternden Trichterabschnitt 224 umfaßt.

Auf die Aufnahmebuchse 220 wiederum ist ein hohlzylindrischer Außenring 226 aufgeschoben, welcher eine dickere Wandung als die Aufnahmebuchse 220 aufweist. Die Aufnahmebuchse 220 und der Außenring 226 sind mittels mehrerer Schrauben 228, welche radiale Durchgangslöcher in dem Außenring 226 und in der Aufnahmebuchse 220 durchsetzen und in radiale Gewinde-Sacklöcher in dem Innenring 208 eingeschraubt sind, drehfest mit dem Innenring 208 verbunden.

Wie aus den Fig. 12 und 13 zu ersehen ist, sind ferner in der Aufnahmebuchse 220, und zwar an dem trichterabschnittseitigen Ende des hohlzylindrischen Abschnitts 222 der Aufnahmebuchse 220, zwei kreisabschnittsförmige Mitnehmerelemente 230 angeordnet, welche mittels Schrauben 232, die radiale Durchgangslöcher in der Aufnahmebuchse 220 durchsetzen und in radiale Gewindesacklöcher in den Mitnehmerelementen 230 eingeschraubt sind, drehfest mit der Aufnahmebuchse 220 verbunden sind.

Die einander zugewandten Ränder der Mitnehmerelemente 230 sind, wie aus Fig. 13 zu ersehen ist, parallel zueinander ausgerichtet und weisen einen solchen Abstand voneinander auf, daß die Mitnehmerelemente 230 den im Querschnitt quadratischen Abschnitt des Mitnahmebolzens 198 formschlüssig zwischen sich aufnehmen können.

Zum leichteren Einführen des Mitnahmebolzens 198 zwischen den Mitnehmerelementen 230 hindurch in den hohlzylindrischen Abschnitt 222 der Aufnahmebuchse 220 hinein sind die Mitnehmerelemente 230 an ihren der Abtriebswelle 206 abgewandten Stirnseiten angeschrägt.

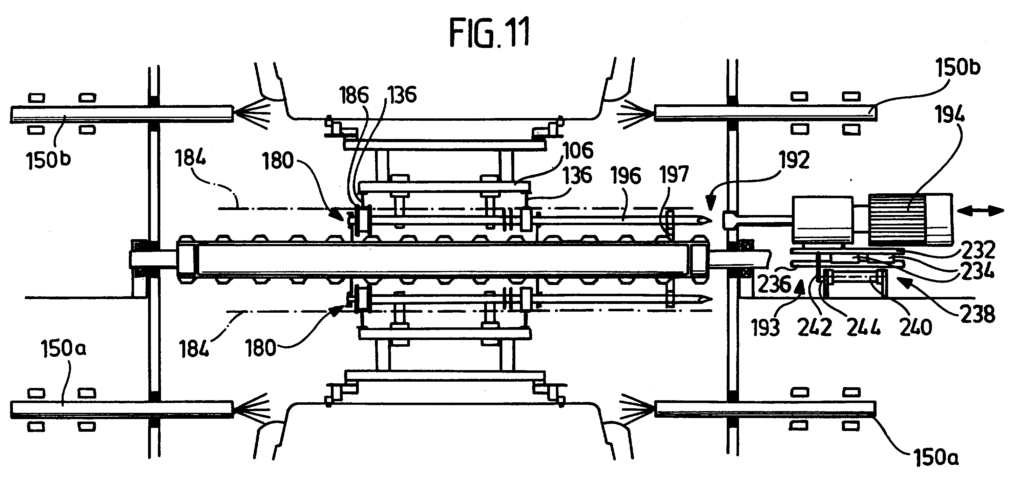

Wie am besten aus Fig. 11 zu ersehen ist, ist der Getriebemotor 194 auf einem Verschiebeschlitten 232 angeordnet, welcher - beispielsweise mittels Wälzkörper-Umlaufführungen 234 - an einer Verschiebeführung 236 parallel zur Achse der Welle 196 verschiebbar geführt ist.

Um den Verschiebeschlitten 232 mit dem Getriebemotor 194 längs der Verschiebeführung 236 zu verschieben, ist eine Bewegungseinrichtung 238 vorgesehen, welche beispielsweise einen Pneumatikzylinder 240 mit einem darin verschiebbaren Kolben 242 umfaßt, welcher mittels einer Kopplungsstange 244 an dem Verschiebeschlitten 232 angreift, so daß der Verschiebeschlitten 232 in parallel zur Richtung der Achse der Welle 196 verschoben wird, wenn der Kolben 242 aus dem Pneumatikzylinder 240 herausbewegt oder in denselben hineinbewegt wird.

Der Getriebemotor 194, der Verschiebeschlitten 232, die Verschiebeführung 236 und die Bewegungseinrichtung 238 für den Verschiebeschlitten 232 bilden zusammen den externen Rollenbahn-Antriebsteil 193.

Zum Ankoppeln der Tragrolle 176a an den Rollenbahn-Antriebsteil 193 wird der Verschiebeschlitten 232 mit dem darauf angeordneten Getriebemotor 194 in radialer Richtung auf das mit dem Mitnahmebolzen 198 versehene Ende der Welle 196 zu verschoben, bis die Spitze 204 des Mitnahmebolzens 198 durch den Trichterabschnitt 224 und die Mitnehmerelemente 230 hindurch in den hohlzylindrischen Abschnitt 222 der Aufnahmebuchse 220 eintaucht. Dabei kommen zwei der Seitenwände des im Querschnitt quadratischen Abschnitts des Mitnahmebolzens 198 in Eingriff mit den Mitnehmerelementen 230, so daß eine drehfeste Verbindung zwischen der Welle 196 einerseits und der Abtriebswelle 206 des Getriebemotors 194 andererseits zustande kommt.

Nach Herstellung dieser drehfesten Verbindung wird bei Betätigung des Getriebemotors 194 die Welle 196 der Tragrolle 176a (und damit, mittels der Kettenübertriebe, sämtliche Tragrollen 176 der Rollenbahn 180) in Drehung versetzt, so daß ein Skidrahmen 106 mit darauf angeordneter Fahrzeugkarosserie 108 von der Zuführ-Rollenbahn 104 auf die Rollenbahn 180 der Drehvorrichtung 110 einfahren oder von der Rollenbahn 180 der Drehvorrichtung 110 auf die Abführ-Rollenbahn 112 ausfahren kann.

Um die Drehvorrichtung 110 nach einem solchen Transportvorgang wieder um die Drehachse 160 drehen zu können, wird der Verschiebeschlitten 232 mit dem darauf angeordneten Getriebemotor 194 nach Abschalten des Getriebemotors 194 in axialer Richtung der Welle 196 von derselben wegbewegt, so daß der Mitnahmebolzen 198 außer Eingriff mit den Mitnehmerelementen 230 kommt und die Verbindung zwischen der Welle 196 und der Abtriebswelle 206 des Getriebemotors 196 unterbrochen ist.

Wie aus den Fig. 10 und 11 zu ersehen ist, kann die Drehantriebsverbindung zwischen dem Getriebemotor 194 und der angetriebenen Tragrolle 176a nur dann hergestellt werden, wenn sich die Rollenbahn 180 in der Ausgangsstellung befindet, in welcher die Stützfläche 184 der Rollenbahn 180 horizontal ausgerichtet ist und sich auf demselben Niveau befindet wie die Stützflächen der Zuführ-Rollenbahn 104 und der AbführRollenbahn 112. In den Fig. 10 und 11 trifft dies nur auf die jeweils oben dargestellte Rollenbahn 180 der ersten Aufnahme 174a, nicht jedoch auf die darunter dargestellte Rollenbahn 180 der zweiten Aufnahme 174b der Drehvorrichtung 110 zu.

Wie bereits erwähnt, ist ein auf die Rollenbahn 180 aufgefahrener Skidrahmen 106 in Bezug auf den Drehrahmen 152 gegen eine Relativbewegung parallel zu den Drehachsen 178 der Tragrollen 176 durch die Spurkränze 186 an den rechtsseitigen Tragkörpern 182 gesichert.

Eine Sicherung des Skidrahmens 106 gegen eine Relativbewegung relativ zu den Drehrahmen 152 in Längsrichtung des Drehrahmens 152 oder senkrecht zur Stützfläche 184 der Rollenbahn 180 erfolgt mittels einer Verriegelungseinrichtung 244, welche im folgenden beschrieben wird.

Die Verriegelungseinrichtung 244 umfaßt einen sich bei einer Drehung des Drehrahmens 152 mit demselben mitdrehenden Verriegelungsteil 246 und einen bei einer Drehung des Drehrahmens 152 sich nicht mitdrehenden Antriebsteil 248.

Der Verriegelungsteil 246 umfaßt eine parallel zu den Drehachsen 178 der Tragrollen 176 ausgerichtete Gewindespindel 250, welche an den Längsrahmenträgern 170 und an einer vom rechten Querträger 154 getragenen Stütze 251 drehbar gelagert ist.

Die Gewindespindel 250 trägt zwei Gewindemuttern 252, welche seitlich so geführt sind, daß sie sich bei einer Drehung der Gewindespindel 250 nicht mitdrehen, sondern, je nach Drehrichtung, aufeinander zu oder voneinander weg bewegen.

Eine vordere Schubplatte 254 und eine hintere Schubplatte 256 sind mittels Schubstäben 258 so mit den beiden Gewindemuttern 252 gelenkig verbunden, daß die vier Schubstäbe 258 eine Raute bilden.

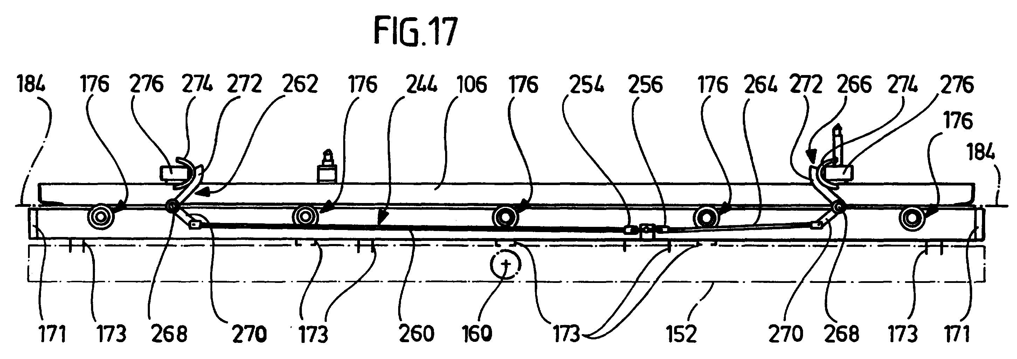

Wie am besten aus Fig. 17 zu ersehen ist, ist die vordere Schubplatte 254 über eine vordere Schubstange 260 gelenkig mit einer vorderen Klammer 262 und die hintere Schubplatte 256 über eine hintere Schubstange 264 gelenkig mit einer hinteren Klammer 266 verbunden.

Die beiden Klammern 262, 266 umfassen jeweils eine drehbar an den Konsolen 170 der Rollenbahn 180 gehaltene Welle 268, von der sich in radialer Richtung ein kurzer Hebel 270 weg erstreckt, an welchem die vordere Schubstange 260 bzw. die hintere Schubstange 264 angelenkt ist.

Ferner umfaßt jede der Klammern 262, 266 zwei senkrecht zur Förderrichtung 102 voneinander beabstandete lange Hebel 272, welche sich im wesentlichen senkrecht zu dem kurzen Hebel 270 radial von der Welle 268 weg erstrecken und an ihrem freien Ende jeweils einen im Querschnitt C-förmigen Bügel 274 tragen.

In der in Fig. 17 dargestellten Schließstellung der Verriegelungseinrichtung 244 umgreifen die C-förmigen Bügel 274 der Klammern 262, 266 jeweils eine Quertraverse 276 eines auf der Rollenbahn 180 angeordneten Skidrahmens 106 von oben, von unten und von hinten bzw. von vorne, so daß der Skidrahmen 106 relativ zu den Klammern 262, 266 in Längsrichtung des Drehrahmens 152 und senkrecht zur Stützfläche 184 der Rollenbahn 180 festgelegt ist.

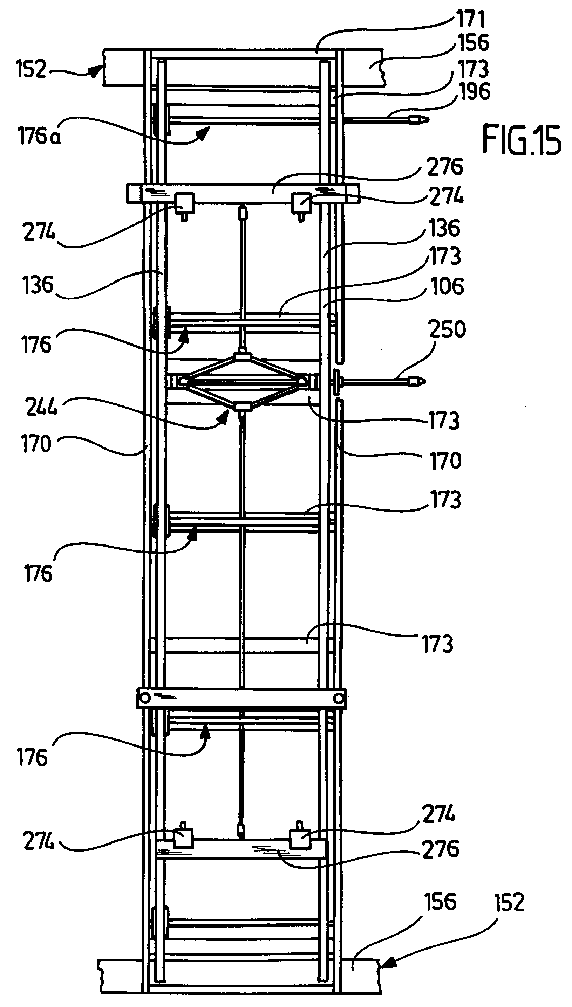

Um den auf der Rollenbahn 180 festgelegten Skidrahmen 106 freizugeben, müssen die Klammern 262, 266 um die jeweilige Welle 268 von der betreffenden Quertraverse 262 weg geschwenkt werden. Wie aus Fig. 17 zu ersehen ist, ist es hierzu erforderlich, die Schubplatten 254 und 256 voneinander weg zu bewegen. Wie ferner aus den Fig. 15 oder 16 zu ersehen ist, müssen hierzu die Gewindemuttern 252 aufeinander zu bewegt werden. Ein an der Rollenbahn 180 angeordneter Skidrahmen 106 kann somit mittels der Verriegelungseinrichtung 244 an der Rollenbahn 180 verriegelt oder freigegeben werden, indem die Gewindespindel 250 in geeigneter Richtung in Drehung versetzt wird.

Zur Erzeugung einer solchen Drehbewegung wird der vorstehend beschriebene, sich mit dem Drehrahmen 152 mitdrehende Verriegelungsteil 246 der Verriegelungseinrichtung 244 mit dem in Fig. 14 dargestellten externen Verriegelungs-Antriebsteil 248 mittels einer Kupplung 278 verbunden.

Der erste, verriegelungsteilseitige Teil der Kupplung 278 wird durch den über den rechten Längsrahmenträger 170 seitlich überstehenden Teil der Gewindespindel 250 und einen an dessen Ende angeordneten Mitnahmebolzen 198 gebildet.

Der an der Gewindespindel 250 angeordnete Mitnahmebolzen 198 ist in derselben Weise ausgebildet wie der vorstehend bereits im Zusammenhang mit dem Antrieb der Rollenbahn 180 beschriebene Mitnahmebolzen 198, so daß auf dessen vorstehende Beschreibung verwiesen wird.

Der zweite, antriebsteilseitige Teil der Kupplung 278 und der Verriegelungs-Antriebsteil 248 selbst sind in derselben Weise ausgebildet wie der antriebsteilseitige Teil der Kupplung 192 und der die Tragrollen 176 der Rollenbahn 180 antreibende Rollenbahn-Antriebsteil 193, so daß insoweit ebenfalls auf die vorstehende Beschreibung Bezug genommen wird.

Es ist somit in derselben Weise möglich, den Getriebemotor 194 des Antriebsteils 248 der Verriegelungseinrichtung 244 mittels der Kupplung 278 mit dem Verriegelungsteil 246 der Verriegelungseinrichtung 244 in Wirkverbindung zu setzen, wenn sich die Rollenbahn 180 in der Ausgangsstellung befindet, wie dies vorstehend bereits für die Herstellung der Verbindung zwischen dem Getriebemotor 194 des Rollenbahn-Antriebsteils 193 beschrieben worden ist.

Wie aus Fig. 14 zu ersehen ist, sind die Antriebsteile 193, 248, insbesondere die Getriebemotoren 194 außerhalb der Kabine 114 angeordnet und durchsetzen die Aufnahmebuchsen 220 Durchtrittsöffnungen in den Seitenwänden 122 der Kabine 114, so daß die betreffende Seitenwand 122 als Abdeckung dient, durch welche der Rollenbahn-Antriebsteil 193 und der Verriegelungs-Antriebsteil 248 vor dem zur Reinigung der Fahrzeugkarosserien 108 verwendeten Naßmedium geschützt sind.

Wie aus den Fig. 10 und 14 zu ersehen ist, sind im unteren Bereich der Drehvorrichtung 110, d. h. unterhalb der Drehachse 160, stationäre Sprühlanzen 148a und bewegliche Sprühlanzen 150a und im oberen Bereich der Drehvorrichtung 110, d. h. oberhalb der Drehachse 160, stationäre Sprühlanzen 148b und bewegliche Sprühlanzen 150b an den Seitenwänden 122 der Kabine 114 angeordnet. Die von den Sprühlanzen durchsetzten Durchtrittsöffnungen in den Seitenwänden 122 sind mittels elastischer Dichtungen 277 abgedichtet.

Die beweglichen Sprühlanzen 150a, 150b sind mittels elektromotorischer, hydraulischer oder pneumatischer Bewegungseinrichtungen in horizontaler Richtung aus der Bahn der Fahrzeugkarosserien 108 herausfahrbar, um die Fahrzeugkarosserien 108 von der Zuführ-Rollenbahn 104 auf die in der Ausgangsstellung befindliche Rollenbahn 180 der Drehvorrichtung 110 oder von der Rollenbahn 180 der Drehvorrichtung 110 auf die Abführ-Rollenbahn 112 fördern zu können.

Ist eine Fahrzeugkarosserie 108 von der Zuführ-Rollenbahn 104 auf die Rollenbahn 180 der Drehvorrichtung 110 gefördert und mittels der Verriegelungseinrichtung 244 daran festgelegt worden, so sind die beweglichen Sprühlanzen 150 in ihre fahrzeugkarosserietyp-abhängigen Arbeitsstellungen bewegbar, in denen die Zerstäuberplatten dieser Sprühlanzen den abzusprühenden Bereichen der jeweiligen Fahrzeugkarosserie 108 unmittelbar benachbart sind bzw. die Zerstäuberplatten der Sprühlanzen in den Innenraum der jeweiligen Fahrzeugkarosserie 108 hineinragen, um die Innenflächen der Fahrzeugkarosserie 108 abzusprühen.

Ferner sind im Bereich der Drehvorrichtung 110 an der Deckenwand 120 der Kabine 114 bewegliche Schwalldüsen 280 angeordnet, welche mittels einer elektromotorischen, hydraulischen oder pneumatischen Bewegungseinrichtung in vertikaler Richtung zu einer an der Drehvorrichtung 110 angeordneten Fahrzeugkarosserie 108 hin oder von derselben weg bewegbar sind.

Jede der Schwalldüsen 280 umfaßt ein Rohr, dessen außerhalb der Kabine 114 angeordnetes Ende an eine (nicht dargestellte) Naßmedium-Zufuhr angeschlossen ist und dessen anderes, in der Kabine 114 angeordnetes Ende sich konisch verjüngt und mit einer (nicht durch eine Zerstäuberplatte verschlossenen) Austrittsöffnung für das Naßmedium versehen ist.

Wie am besten aus den Fig. 1 bis 9 zu ersehen ist, ist unterhalb der Drehvorrichtung 110 eine Sammelwanne 282 angeordnet, deren Boden 284 derart gewellt ist, daß mehrere sich quer zur Förderrichtung 102 erstreckende Abflußtrichter 286 gebildet werden, welche an ihrer tiefsten Stelle jeweils eine Abflußöffnung 288 aufweisen.

Alle Abflußöffnung 288 sind an eine Naßmedium-Abführleitung 290 angeschlossen, durch welche das in der Sammelwanne 282 aufgefangene Naßmedium einer Weiterverarbeitung, beispielsweise einer Reinigung oder Entsorgung, zugeführt werden kann.

An einer vorderen Begrenzungswand 292 und an einer hinteren Begrenzungswand 294 der Sammelwanne 282 sind zwei, in der Seitenansicht im wesentlichen U-förmige Spritzringe 296 gehalten, welche an eine (nicht dargestellte) Naßmedium-Zufuhr angeschlossen sind.

Wie aus den Fig. 4 bis 10 zu ersehen ist, sind diese Spritzringe 296 an ihren Oberseiten mit Spritzdüsen versehen, durch welche Naßmedium auf die zu reinigenden Fahrzeugkarosserien 108 gesprüht werden kann.

Diese Spritzdüsen können beispielsweise die Form kurzer Rohrstücke aufweisen, welche an den Spritzringen 296 festgelegt sind und durch deren Seitenwand in den Innenraum der Spritzringe 296 münden.

Um zu verhindern, daß aus den Sprühlanzen oder den Schwalldüsen 280 austretendes und von einer der an der Drehvorrichtung 110 gehaltenen Fahrzeugkarosserien 108 abtropfendes Naßmedium auf die jeweils andere Fahrzeugkarosserie 108 gelangt und diese verschmutzt, ist zu beiden Seiten des Drehrahmens 152 Jeweils eine Trennwand 279 vorgesehen, welche parallel zum Drehrahmen 152 ausgerichtet ist und sowohl in der Längsrichtung der in den Aufnahmen 174a, 174b aufgenommenen Fahrzeugkarosserien als auch quer zu dieser Längsrichtung über die in den Aufnahmen 174a, 174b aufgenommenen Fahrzeugkarosserien 108 übersteht.

Jede der Trennwände 279 ist mit parallel zur Längsrichtung des Drehrahmens 152 verlaufenden Abflußrinnen 281 versehen, welche beispielsweise einen trapezförmigen Querschnitt aufweisen. Durch diese Abflußrinnen 281 wird auf die jeweilige Trennwand 279 gelangendes Naßmedium in definierter Weise zu dem vorderen oder zu dem hinteren Ende des Drehrahmens 152 (je nach der aktuellen Neigung des Drehrahmens 152) geleitet, von wo das Naßmedium in die Sammelwanne 181 abtropft, ohne zu der unter der Trennwand 279 angeordneten Fahrzeugkarosserie 108 zu gelangen.

Die vorstehend beschriebene erste Ausführungsform einer Reinigungsstation 100 funktioniert wie folgt:

In einem in Fig. 4 dargestellten Betriebszustand befindet sich eine erste Fahrzeugkarosserie 300 auf der Abfuhr-Rollenbahn 112 und wird dort mittels der stationären Sprühlanzen 148 und beweglichen Sprühlanzen 150 von außen abgesprüht.

Wird die Reinigungsstation 100 als sogenannter "body-washer" nach dem Karosserierohbau und vor dem Eintritt in eine Karosserie-Beschichtungsanlage eingesetzt, so wird als Naßmedium zur Reinigung der Fahrzeugkarosserien 108 als Naßmedium normales Leitungswasser mit chemischen Reinigungszusätzen, insbesondere Zusätzen zur Entfettung, eingesetzt.

Wird die Reinigungsstation 100 innerhalb einer Karosserie-Beschichtungsanlage nach einem Vorbehandlungsbad und vor dem Eintritt in ein Tauchlackierbecken als Spülstation verwendet, so wird als Naßmedium zur Reinigung der Fahrzeugkarosserien 108 vollentsalztes Wasser (VE-Wasser) eingesetzt.

In beiden Fällen wird Naßmedium mit gegenüber der Umgebungstemperatur erhöhter Temperatur von beispielsweise ungefähr 60°C verwendet.

Sowohl im Bereich der Abführ-Rollenbahn 112 als auch im Bereich der Drehvorrichtung 110 und dem Bereich der Zuführ-Rollenbahn 104 wird üblicherweise dasselbe Naßmedium zur Reinigung der Fahrzeugkarosserien 108 verwendet; es ist jedoch grundsätzlich auch möglich, in den drei genannten Bereichen nach Zusammensetzung und/oder Temperatur unterschiedliche Naßmedien einzusetzen.

In dem in Fig. 4 dargestellten Betriebszustand ist in der (in Fig. 4 unten dargestellten) ersten Aufnahme 174a der Drehvorrichtung 110 eine zweite Fahrzeugkarosserie 302 aufgenommen, welche sich in einer unteren Reinigungsstellung befindet, in welcher die zweite Fahrzeugkarosserie 302 um einen Winkel von 180° gegenüber der Horizontalen gedreht ist.

In dieser unteren Reinigungsstellung wird die zweite Fahrzeugkarosserie 302 mittels der Spritzringe 296 von außen im Bereich der Motorhaube, des Daches und der Heckklappe besprüht.

Außerdem werden in dieser unteren Reinigungsstellung, wie aus Fig. 10 zu ersehen ist, der Unterboden der Fahrzeugkarosserie 302 und der Innenraum desselben mittels der im unteren Bereich der Seitenwände 122 angeordneten beweglichen Sprühlanzen 150a und die Seitenteile der zweiten Fahrzeugkarosserie 302 mittels der im unteren Bereich der Seitenwände 122 angeordneten stationären Sprühlanzen 148a abgesprüht.

Ferner ist in dem in Fig. 4 dargestellten Betriebszustand eine dritte Fahrzeugkarosserie 304 in der in Fig. 4 oben dargestellten zweiten Aufnahme 174b der Drehvorrichtung 110 aufgenommen und befindet sich in einer Ausgangsstellung, in welcher die dritte Fahrzeugkarosserie 304 noch nicht gegenüber der Horizontalen gedreht worden ist.

Zugleich ist diese Ausgangsstellung eine obere Reinigungsstellung, in welcher die dritte Fahrzeugkarosserie 304 mittels der im oberen Bereich der Seitenwände 122 angeordneten beweglichen Sprühlanzen 150b im Innenbereich und im Außenbereich und mittels der im oberen Bereich der Seitenwände 122 angeordneten stationären Sprühlanzen 148b im Außenbereich abgesprüht wird.

Das von der zweiten Fahrzeugkarosserie 302 in der unteren Reinigungsstellung abtropfende Naßmedium gelangt direkt in die Sammelwanne 282 und fließt aus derselben durch die Naßmedium-Abführleitung 290 ab.

Das von der dritten Fahrzeugkarosserie 304 in der oberen Reinigungsstellung abtropfende Naßmedium gelangt zunächst in die Abflußrinnen 281 der Trennwand 279 der zweiten Aufnahme 174b, strömt in diesen Abflußrinnen 281 bis ans vordere oder hintere Ende der Trennwand 279 und tropft von dort in die Sammelwanne 282, ohne auf die in der unteren Reinigungsstellung befindliche zweite Fahrzeugkarosserie 302 zu gelangen und dieselbe zu verschmutzen.

Ferner ist in dem in Fig. 4 dargestellten Betriebszustand eine vierte Fahrzeugkarosserie 306 auf der Zuführ-Rollenbahn 104 angeordnet und wird dort mittels der stationären Sprühlanzen 148 und der beweglichen Sprühlanzen 150 von außen abgesprüht.

Nachdem ein Reinigungstakt der Drehvorrichtung 110 abgeschlossen ist, werden die beweglichen Sprühlanzen 150a und 150b in ihre Ruhestellungen gefahren, in denen sie sich außerhalb der Bahn der Fahrzeugkarosserien 302, 304 und des Drehrahmens 152 befinden. Anschließend wird der Drehrahmen 152 mittels des Drehantriebsmotors 162 (in der Blickrichtung der Fig. 4 im Uhrzeigersinn) um 90° um die horizontale Drehachse 160 gedreht, bis der in Fig. 5 dargestellte Betriebszustand erreicht ist. Ein während dieser Drehung von der Drehvorrichtung eingenommener Zwischenzustand ist in Fig. 1 dargestellt.

Nach Abschluß der Drehung um 90° befindet sich die zweite Fahrzeugkarosserie 302 in einer zweiten seitlichen Reinigungsposition, in welcher diese Fahrzeugkarosserie um 270° gegenüber der Horizontalen gedreht ist, und die dritte Fahrzeugkarosserie 304 befindet sich in einer ersten seitlichen Reinigungsstellung, in welcher diese Fahrzeugkarosserie um 90° gegenüber der Horizontalen gedreht ist.

Nach Abschluß der Drehbewegung werden die Schwalldüsen 280 so weit nach unten auf die Fahrzeugkarosserien 302, 304 zu bewegt, bis die Düsenaustrittsöffnungen nahe der Eingangsöffnungen von in den Bodengruppen dieser Karosserien angeordneten Hohlräumen angeordnet und auf diese Eintrittsöffnungen gerichtet sind.

Ist diese Arbeitsstellung der Schwalldüsen 280 erreicht, so wird die Naßmedium-Zufuhr zu den Schwalldüsen 280 geöffnet, worauf Naßmedium aus den Schwalldüsen 280 unter einem Druck von 1 bis 5 bar in die Hohlräume in den Bodengruppen der Fahrzeugkarosserien 302, 304 eindringt, diese im wesentlichen geradlinig durchströmt und an Austrittsöffnungen dieser Hohlräume, welche im wesentlichen vertikal unter den Eintrittsöffnungen liegen, wieder austritt und in die Sammelwanne 282 gelangt. Durch das gezielte Ausspülen der Hohlräume in den Bodengruppen der Fahrzeugkarosserien 302, 304 wird dabei ein besonders guter Reinigungseffekt erzielt.

Die Bodengruppe der in der ersten seitlichen Reinigungsstellung befindlichen dritten Fahrzeugkarosserie 304 wird dabei von hinten nach vorne und die Bodengruppe der in der zweiten seitlichen Reinigungsstellung befindlichen zweiten Fahrzeugkarosserie 302 wird dabei von vorne nach hinten durchspült.

Die optimale Arbeitsstellung der Schwalldüsen 280 hängt vom Typ der jeweils zu reinigenden Fahrzeugkarosserien 108 ab und wird von einem (nicht dargestellten) Steuergerät der Reinigungsstation 100, welche die Drehbewegung der Drehvorrichtung 110 und die Bewegungen der beweglichen Sprühlanzen 150 und der Schwalldüsen 280 steuert, in Abhängigkeit von dem Typ der zu reinigenden Fahrzeugkarosserien eingestellt.

Während sich die Fahrzeugkarosserien 302, 304 in den seitlichen Reinigungsstellungen befinden, können sie zugleich mittels der Spritzringe 296 von außen abgesprüht werden.

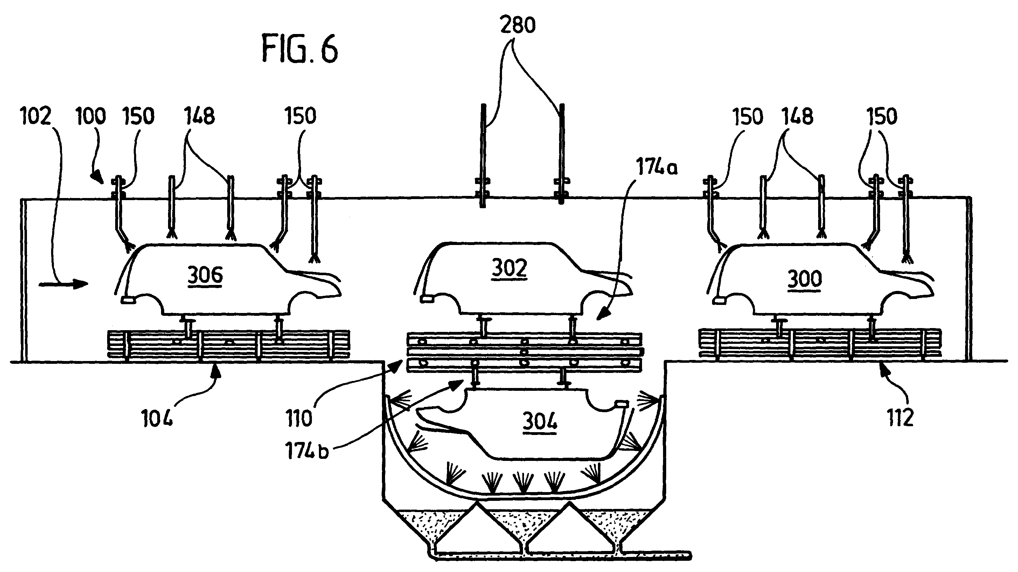

Nach Abschluß dieses Reinigungstakts der Drehvorrichtung 110 werden die Schwalldüsen 280 nach oben aus der Bahn der Fahrzeugkarosserien 203, 304 und des Drehrahmens 152 hinausbewegt. Anschließend wird der Drehrahmen 152 mittels des Drehantriebsmotors 162 (in der Darstellung der Fig. 5 gesehen) im Uhrzeigersinn um einen Winkel von 90° weitergedreht, bis der in Fig. 6 dargestellte Betriebszustand erreicht ist, in welchem die zweite Fahrzeugkarosserie 302 die Ausgangsstellung einnimmt, in welcher diese Karosserie nicht gegenüber der Horizontalen gedreht ist, und die dritte Fahrzeugkarosserie 304 die untere Reinigungsstellung einnimmt, in welcher diese Karosserie um 180° gegen die Horizontale gedreht ist.

Mit Erreichen der Ausgangsstellung ist der Reinigungszyklus für die zweite Fahrzeugkarosserie 302 in der Drehvorrichtung 110 abgeschlossen, so daß diese Karosserie aus der Drehvorrichtung 110 ausgefahren werden kann.

Hierzu wird von dem Steuergerät der Reinigungsstation 100 zunächst der Sprühvorgang an der Abführ-Rollenbahn 112 beendet, und die beweglichen Sprühlanzen 150 im Bereich der AbführRollenbahn 112 werden aus der Bahn der ersten Fahrzeugkarosserie 300 hinausbewegt.

Anschließend wird der Antrieb der Abführ-Rollenbahn 112 betätigt, so daß die erste Fahrzeugkarosserie 300 (in der Darstellung der Fig. 6 nach rechts) aus der Reinigungsstation 100 hinaus in einen sich daran anschließenden Vorbehandlungsabschnitt oder Lackierabschnitt gefördert wird.

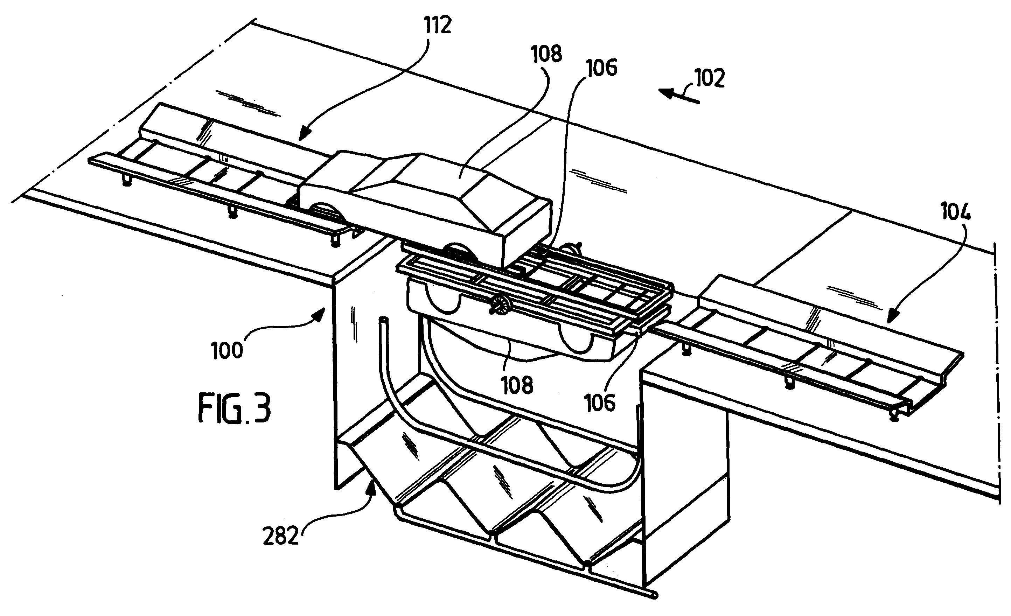

Anschließend werden der Rollenbahn-Antriebsteil 193 und der Verriegelungs-Antriebsteil 148 der Verriegelungseinrichtung 244 in der vorstehend beschriebenen Weise mittels der Kupplungen 192 bzw. 278 mit der Welle 196 der Tragrolle 176a bzw. mit der Gewindespindel 250 verbunden. Darauf werden nacheinander die Getriebemotoren 194 des Verriegelungs-Antriebsteils 148 und des Rollenbahn-Antriebsteils 193 betätigt, um erst die Verriegelung des Skidrahmens 106 der zweiten Fahrzeugkarosserie 302 zu lösen und anschließend die zweite Fahrzeugkarosserie 302 mittels der Rollenbahn 180 der ersten Aufnahme 174a der Drehvorrichtung 110 auf die Abführ-Rollenbahn 112 zu fördern. Dieses Ausfahren einer Fahrzeugkarosserie aus der Drehvorrichtung 100 ist in Fig. 3 dargestellt.

Darauf wird der Sprühvorgang an der Zuführ-Rollenbahn 104 unterbrochen, und die beweglichen Sprühlanzen 150 im Bereich der Zuführ-Rollenbahn 104 werden aus der Bahn der vierten Fahrzeugkarosserie 306 herausbewegt.

Anschließend wird die vierte Fahrzeugkarosserie 306 durch Betätigen des Antriebs der Zuführ-Rollenbahn 104 auf die Rollenbahn 180 der ersten Aufnahme 174a der Drehvorrichtung 110 gefördert und dort verriegelt, indem die Drehrichtung des Getriebemotors 194 des Antriebsteils 248 der Verriegelungseinrichtung 244 umgekehrt wird.

Eine fünfte Fahrzeugkarosserie 308 wird (in der Darstellung der Fig. 6 gesehen von links) aus dem in der Förderrichtung 102 vor der Reinigungsstation 100 liegenden Bereich auf die Zuführ-Rollenbahn 104 gefördert.

Anschließend werden die beweglichen Sprühlanzen 150 im Bereich der Zuführ-Rollenbahn 104, im Bereich der Abführ-Rollenbahn 112 und die beweglichen Sprühlanzen 150b im oberen Bereich der Drehvorrichtung 110 wieder in ihre Arbeitsstellungen gefahren, um die Sprühreinigung der Karosserien 302, 304 und 308 fortzusetzen.

Die Antriebstelle 193 und 248 der Rollenbahn 180 bzw. der Verriegelungseinrichtung 244 werden durch Verschieben der jeweiligen Verschiebeschlitten 232 von der Welle 196 bzw. von der Gewindespindel 250 abgekoppelt.

Damit ist der in Fig. 7 dargestellte Betriebszustand der Reinigungsstation 100 erreicht.

Nach Beendigung dieses Arbeitstakts der Drehvorrichtung 110 werden die beweglichen Sprühlanzen 150a und 150b im Bereich der Drehvorrichtung 110 in ihre Ruhestellungen bewegt, in welchen sie außerhalb der Bewegungskonturen der Fahrzeugkarosserien 304 und 306 und des Drehrahmens 152 angeordnet sind.

Darauf wird der Drehrahmen 152 mittels des Drehantriebsmotors 162 (in der Darstellung der Fig. 7 gesehen) im Uhrzeigersinn um einen Winkel von 90° um die horizontale Drehachse 160 gedreht, bis der in Fig. 8 dargestellte Betriebszustand erreicht ist, in welchem die dritte Fahrzeugkarosserie 304 die zweite seitliche Reinigungsstellung einnimmt, in welcher diese Karosserie gegenüber der Horizontalen um 270° gedreht ist, und die vierte Fahrzeugkarosserie 306 die erste seitliche Reinigungsstellung einnimmt, in welcher diese Karosserie um einen Winkel von 90° gegen die Horizontale gedreht ist.

In dieser Stellung der Fahrzeugkarosserien 304 und 306 werden wiederum die Schwalldüsen 280 vertikal nach unten in ihre Arbeitsstellungen bewegt, um die Hohlräume in den Bodengruppen der Karosserien 304 und 306 zu durchspülen, wie dies bereits vorstehend im Zusammenhang mit Fig. 5 erläutert worden ist.

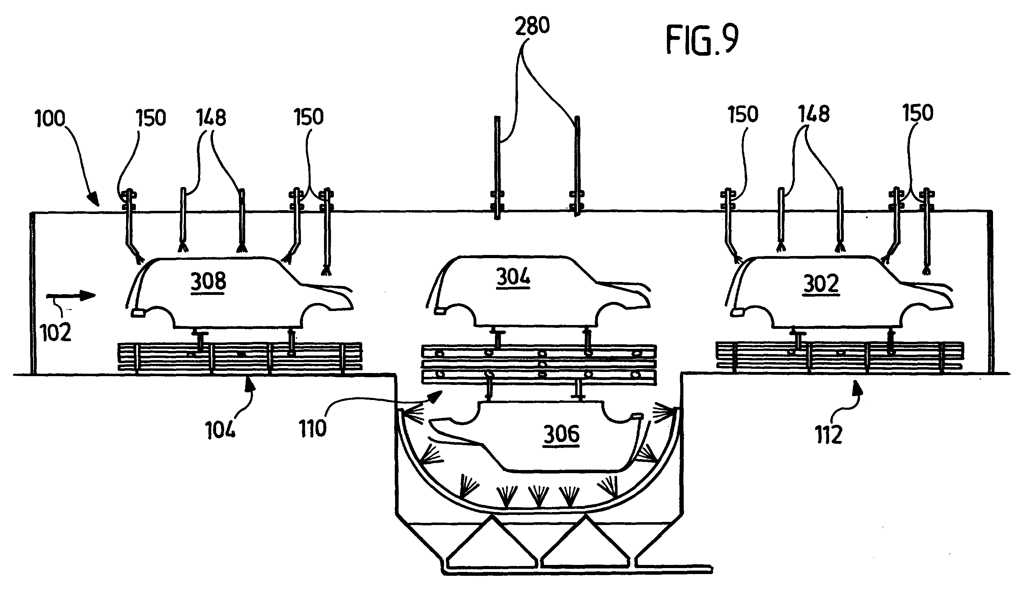

Nach Abschluß dieses Reinigungstakts der Drehvorrichtung 110 werden die Schwalldüsen 280 wieder in ihre Ruhestellungen bewegt, in welchen sie außerhalb der Bahn der Fahrzeugkarosserien 304 und 306 und des Drehrahmens 152 angeordnet sind, und der Drehrahmen 152 wird mittels des Drehantriebsmotors 162 (in der Blickrichtung der Fig. 8 gesehen) im Uhrzeigersinn um einen Winkel von 90° um die Drehachse 160 gedreht, bis der in Fig. 9 dargestellte Betriebszustand erreicht ist, in welchem die dritte Fahrzeugkarosserie 304 den Ausgangszustand einnimmt, in welchem diese Karosserie nicht gegenüber der Horizontalen gedreht ist, und die vierte Fahrzeugkarosserie 306 die untere Reinigungsstellung einnimmt, in welcher diese Karosserie gegenüber der Horizontalen um einen Winkel von 180° gedreht ist.

Damit ist der Reinigungszyklus für die dritte Fahrzeugkarosserie 304 in der Drehvorrichtung 110 beendet, und die dritte Fahrzeugkarosserie 304 wird in derselben Weise aus der Drehvorrichtung 110 ausgefahren, wie dies bereits vorstehend für die zweite Fahrzeugkarosserie 302 beschrieben worden ist.

Bei der vorstehenden Beschreibung der Funktion der ersten Ausführungsform der Reinigungsstation 100 wurde aus Gründen der Vereinfachung ausgegangen, daß die Fahrzeugkarosserien in der Drehvorrichtung 110 in vier verschiedene Reinigungsstellungen gebracht werden, in denen die Fahrzeugkarosserien gegenüber der Horizontalen um die Winkel 0°, 90°, 180° bzw. 270° gedreht sind. Je nach dem Typ der zu reinigenden Fahrzeugkarosserien kann jedoch auch eine geringere oder eine größere Zahl von Reinigungsstellungen vorgesehen sein, und die Fahrzeugkarosserien können in diesen Reinigungsstellungen um beliebige andere Winkel, beispielsweise um 0°, 80° und 240°, gegenüber der Horizontalen gedreht sein. Das Steuergerät der Reinigungsstation wählt je nach dem Typ der zu reinigenden Fahrzeugkarosserie die für diesen Karosserietyp vorgegebenen Reinigungsstellungen und die zugehörigen Arbeitsstellungen der beweglichen Sprühlanzen und der Schwalldüsen aus. Der Typ der zu reinigenden Fahrzeugkarosserien wird dem Steuergerät entweder über eine Datenleitung oder durch ein geeignetes Eingabegerät eingegeben, oder aber die Reinigungsstation ist mit Sensoren versehen, mit deren Hilfe das Steuergerät den Typ der zu reinigenden Fahrzeugkarosserien selbsttätig erkennt.

Der gesamte Naßmedium-Durchsatz durch die Sprühlanzen und Schwalldüsen der Reinigungsstation 100 beträgt typischerweise 100 bis 1000 m³/h.

Eine in den Fig. 18 bis 23 dargestellte zweite Ausführungsform der Reinigungsstation 100 unterscheidet sich von der vorstehend beschriebenen ersten Ausführungsform dadurch, daß die Fahrzeugkarosserien 108 aus der Drehvorrichtung 110' der zweiten Ausführungsform nicht in der Standardstellung, in welcher Fensteröffnungen der Fahrzeugkarosserien 108 oberhalb der jeweiligen Bodengruppe angeordnet sind, ausfahren, sondern in einer Kopfüberstellung, in welcher die Fensteröffnungen der Fahrzeugkarosserien 108 unterhalb der Bodengruppe angeordnet sind.

Um die Fahrzeugkarosserien 108 in der Kopfüberstellung aus der Drehvorrichtung 110' ausfahren zu können, umfaßt jede der beiden Aufnahmen 174a, 174b jeweils nicht nur eine Rollenbahn, sondern jeweils eine untere Rollenbahn 310 und eine obere Rollenbahn 312, deren Aufbau im folgenden beschrieben wird; die Drehvorrichtung 110' weist also insgesamt vier Rollenbahnen auf.

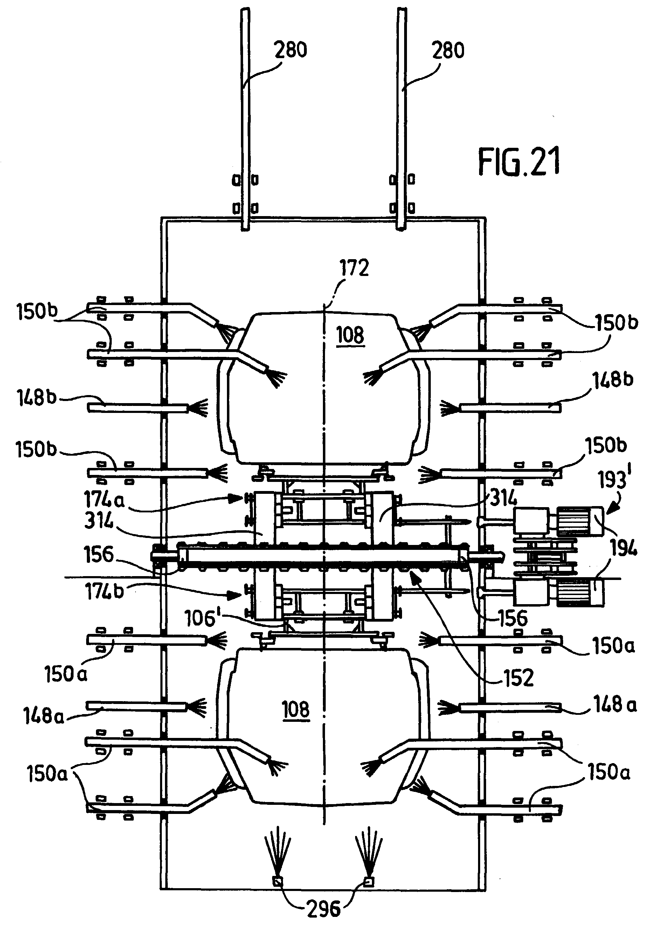

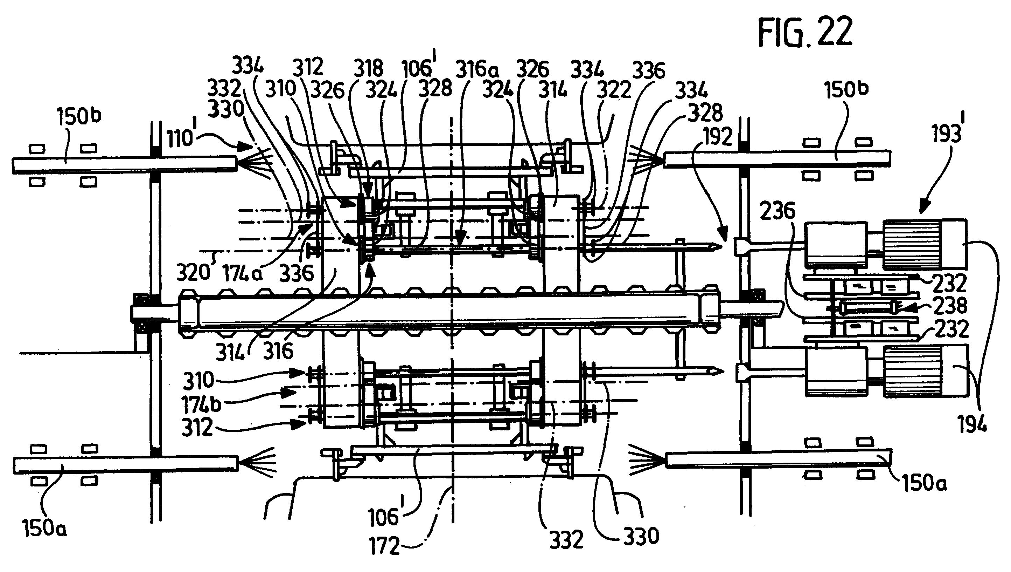

Im folgenden wird nur der Aufbau der Rollenbahnen der (in den Fig. 21 und 22 oben dargestellten) ersten Aufnahme 174a beschrieben; die zweite Aufnahme 174b ist bezüglich einer die Drehachse 160 und die Längsrichtung des Drehrahmens 152 enthaltenden Ebene spiegelsymmetrisch hierzu ausgebildet.

Die Querträger 156 des Drehrahmens 152 der Drehvorrichtung 110' tragen zwei Konsolen 314 (siehe Fig. 21 und 22), welche sich parallel zur Längsrichtung des Drehrahmens 152 erstrecken und bezüglich der Längsmittelebene 172 des Drehrahmens 152 symmetrisch zueinander ausgebildet sind.

In den Konsolen 314 sind untere Tragrollen 316 und obere Tragrollen 318 um senkrecht zur Längsrichtung des Drehrahmens 152 ausgerichtete horizontale Drehachsen 320 bzw. 322 drehbar gelagert.

Jede der Tragrollen 316, 318 umfaßt zwei zylindrische Tragkörper 324, die in Richtung der Drehachsen 320 bzw. 322 voneinander beabstandet sind und die mit Spurkränzen 326 zur seitlichen Führung eines Skidrahmens versehen sind.

Nur die Tragkörper 324 einer einzigen direkt angetriebenen unteren Tragrolle 316a sind mittels einer Welle 328 drehfest miteinander verbunden; die Tragkörper 324 der übrigen Tragrollen 316, 318 sind nicht direkt miteinander verbunden.

Die Tragkörper 324 der unteren Tragrollen 316 weisen eine gemeinsame obere Tangentialebene auf, welche eine untere Stützfläche 330 für einen Skidrahmen bildet.

In entsprechender Weise weisen die Tragkörper 324 der oberen Tragrollen 318 eine gemeinsame untere Tangentialebene auf, welche eine obere Stützfläche 332 für einen Skidrahmen bildet.

Die unteren Tragrollen 316 bilden zusammen die untere Rollenbahn 310 der Aufnahme 174a, während die oberen Tragrollen 318 zusammen die obere Rollenbahn 312 der Aufnahme 174a bilden.

Jede der Tragrollen 316, 318 umfaßt jeweils vier Zahnräder 334, von denen jedem Tragkörper 324 der Tragrolle jeweils zwei zugeordnet sind, welche zusammen mit auf den Zahnrädern 334 aufliegenden Zahnketten Kettenübertriebe zum Übertragen einer Drehbewegung von jeweils einer Tragrolle auf eine dieser Tragrolle benachbarte Tragrolle bilden.

Insbesondere ist mittels Ketten 336 die Übertragung einer Drehbewegung von der direkt angetriebenen unteren Tragrolle 316a auf die unmittelbar darüber angeordnete obere Tragrolle 318 möglich.

Die Welle 328 der direkt angetriebenen unteren Tragrolle 316a ist in derselben Weise mittels einer Kupplung 192 mit einem externen Rollenbahn-Antriebsteil 193' verbindbar, wie dies bereits vorstehend im Zusammenhang mit der ersten Ausführungsform der Reinigungsstation beschrieben worden ist.

Der Rollenbahn-Antriebsteil 193' der zweiten Ausführungsform unterscheidet sich von demjenigen der ersten Ausführungsform lediglich dadurch, daß er nicht nur einen Getriebemotor 194, sondern deren zwei umfaßt, welche bezüglich einer die Drehachse 160 des Drehrahmens 152 enthaltenen horizontalen Ebene symmetrisch zueinander ausgebildet und ausgerichtet sind, so daß die Wellen 328 der direkt angetriebenen Tragrollen 316a der unteren Rollenbahn 310 der ersten Aufnahme 174a und der unteren Rollenbahn 310 der zweiten Aufnahme 174b gleichzeitig an jeweils einen der Getriebemotore 194 angekoppelt werden können.

Zu diesem Zweck ist jeder der beiden Getriebemotore 194 auf jeweils einem Verschiebeschlitten 232 an jeweils einer Verschiebeführung 236 verschieblich geführt, wobei die Verschiebungen beider Verschiebeschlitten 232 durch dieselbe Bewegungseinrichtung 238 bewirkt wird und somit untereinander synchronisiert sind.

Die Verriegelungseinrichtungen 244 der Drehvorrichtung 110' der zweiten Ausführungsform unterscheiden sich von denjenigen der ersten Ausführungsform lediglich dadurch, daß der Verriegelungs-Antriebsteil 248', ebenso wie der Rollenbahn-Antriebsteil 193', nicht nur einen Getriebemotor 194, sondern deren zwei umfaßt, welche bezüglich einer die Drehachse 160 des Drehrahmens 152 enthaltenen horizontalen Ebene symmetrisch zueinander ausgebildet und ausgerichtet sind, so daß die Gewindespindeln 250 der Verriegelungsteile 246 der ersten Aufnahme 174a und der zweiten Aufnahme 174b gleichzeitig an jeweils einen der Getriebemotore 194 angekoppelt werden können.

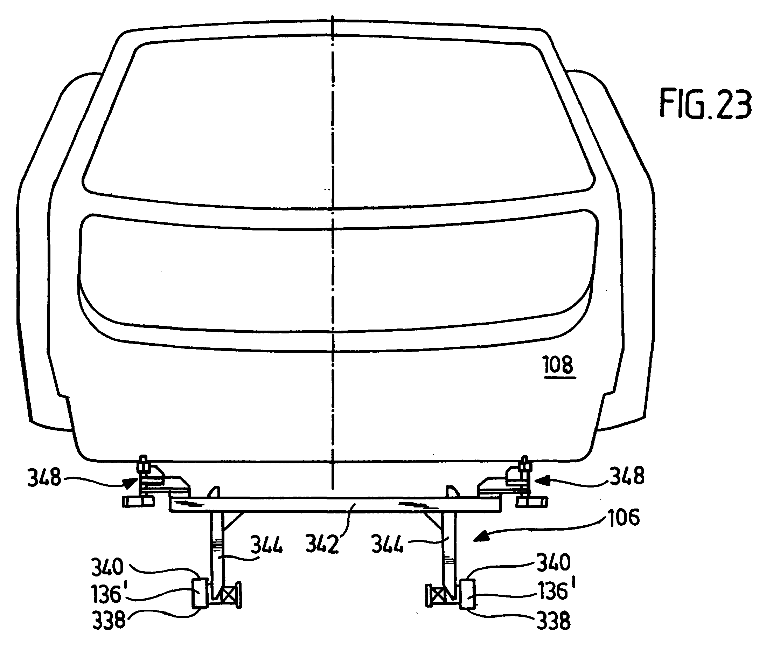

Um in den vorstehend beschriebenen Aufnahmen 174a bzw. 174b der Drehvorrichtung 110' aufgenommen werden zu können, sind die Fahrzeugkarosserien 108 bei der zweiten Ausführungsform der Reinigungsstation 100 auf einem Skidrahmen der in Fig. 23 dargestellten Art angeordnet.

Ein solcher Skidrahmen 106' umfaßt zwei parallel in Abstand voneinander angeordnete Skidkufen 136', die beispielsweise als Hohlprofile mit rechteckigem Querschnitt ausgebildet sind.

Jede der Skidkufen 136' weist eine sich in der Längsrichtung des Skidrahmens 106' erstreckende, im wesentlichen rechteckige ebene untere Auflagefläche 338 und eine der unteren Auflagefläche 338 abgewandte, sich ebenfalls in der Längsrichtung des Skidrahmens 106' erstreckende, im wesentlichen rechteckige ebene obere Auflagefläche 340 auf.

Die Auflageflächen 338 und 340 dienen dazu, den Skidrahmen 106' auf den Mantelflächen von zylindrischen Tragkörpern 324 von Tragrollen einer Rollenbahn abzustützen.

Die beiden Skidkufen 136' des Skidrahmens 106' sind mittels mehrerer senkrecht zu den Skidkufen 136' ausgerichteter Querstreben und mittels Quertraversen 342, welche sich ebenfalls senkrecht zur Längsrichtung des Skidrahmens 106' erstrecken und über Stützen 344 an den inneren Seitenwänden 346 der Skidkufen 136' gehalten sind, miteinander verbunden.

Die Quertraversen 342 dienen der Aufnahme der zu tragenden Fahrzeugkarosserie 108 und sind zu diesem Zweck an ihren Enden mit Verriegelungselementen 348 versehen, mittels derer die Fahrzeugkarosserie 108 an den Quertraversen 342 festlegbar ist.

Die Skidkufen 136' können sowohl in der in Fig. 23 dargestellten Standardstellung (mit der unteren Auflagefläche 338) als auch in einer Kopfüberstellung, in welcher der Skidrahmen 106' um 180° um eine horizontale Drehachse gedreht ist, (mit der oberen Auflagefläche 340) auf Tragrollen einer Rollenbahn aufliegen und durch die Reibung zwischen den Auflageflächen 338 oder 340 einerseits und den Mantelflächen der Tragkörper der Rollenbahn andererseits vorwärts bewegt werden.

So liegen die Skidkufen 136' des in Fig. 21 oben dargestellten Skidrahmens 106' auf der unteren Stützfläche 330 der unteren Rollenbahn 310 der ersten Aufnahme 174a der Drehvorrichtung 110' auf, so daß dieser obere Skidrahmen 106' mittels der unteren Rollenbahn 310 der ersten Aufnahme 174a transportiert werden kann, während der in Fig. 21 unten dargestellte Skidrahmen 106' mit seinen Skidkufen 136' auf der oberen Stützfläche 332 der oberen Rollenbahn 312 der zweiten Aufnahme 174b der Drehvorrichtung 110' aufliegt und somit mittels der oberen Rollenbahn 312 der zweiten Aufnahme 174b transportiert werden kann.

Wie aus den Fig. 18 bis 20 zu ersehen ist, schließt sich in der Förderrichtung 102 an die Drehvorrichtung 110' eine ausgangsseitige Abführ-Rollenbahn 112' an, welche an einem von der Deckenwand 120 der Kabine 114 herabhängenden Gerüst 350 angeordnet ist, welches an seiner Unterseite zwei parallel zur Förderrichtung 102 ausgerichtete Längsrahmenträger 352 hält.

An diesen Längsrahmenträgern 352 sind die Tragkörper 354 von Tragrollen 356 der Abführ-Rollenbahn 112' drehbar gelagert. Mittels an den Tragrollen angeordneter, (nicht dargestellter) Zahnräder und (ebenfalls nicht dargestellter) Ketten stehen die Tragrollen 356 der Abführ-Rollenbahn 112' mit (nicht dargestellten) Antriebsmotoren in Wirkverbindung, so daß die Tragkörper 354 der Tragrollen 356 in Drehbewegung versetzt werden können. Dabei kann vorgesehen sein, daß die AbführRollenbahn 112' in derselben Weise mit einem externen Rollenbahn-Antriebsteil 193 mittels einer Kupplung 192 verbindbar ist, wie dies bereits vorstehend im Zusammenhang mit den Rollenbahnen der Drehvorrichtungen 110 bzw. 110' beschrieben worden ist.

Die Tragkörper 354 der Tragrollen 356 der Abführ-Rollenbahn 112' weisen eine gemeinsame obere Tangentialebene auf, welche eine Stützfläche 358 für die Skidrahmen 106' bildet.

Die Stützfläche 358 der Abführ-Rollenbahn 112' liegt auf derselben Höhe wie die obere Stützfläche 332 der oberen Rollenbahn 312 der zweiten Aufnahme 174b in der in Fig. 21 dargestellten Stellung der Drehvorrichtung 110', so daß in diesem Zustand der Drehvorrichtung 110' die in der zweiten Aufnahme 174b unten an der Drehvorrichtung 110' angeordnete Fahrzeugkarosserie 108 in horizontaler Richtung von der oberen Rollenbahn 312 der zweiten Aufnahme 174b auf die Abführ-Rollenbahn 112' gefördert werden kann.

Damit die Fahrzeugkarosserien 108 aus der unteren Reinigungsstellung von der Drehvorrichtung 110' zu der Abführ-Rollenbahn 112' bewegt werden können, entfällt bei der zweiten Ausführungsform der Reinigungsstation 100 die hintere Begrenzungswand 294 der Sammelwanne 282, welche unterhalb der Drehvorrichtung 110' angeordnet ist.

Im übrigen stimmt die zweite Ausführungsform der Reinigungsstation 100 mit der vorstehend beschriebenen ersten Ausführungsform überein.

Die zweite Ausführungsform der Reinigungsstation 100 funktioniert wie folgt:

In einem in Fig. 18 dargestellten Betriebszustand befindet sich eine erste Fahrzeugkarosserie 300 in Kopfüberstellung an der Abführ-Rollenbahn 112'.

In der (in Fig. 18 unten dargestellten) ersten Aufnahme 174a der Drehvorrichtung 110' ist eine zweite Fahrzeugkarosserie 302 aufgenommen, welche sich in einer unteren Reinigungsstellung befindet, in welcher die zweite Fahrzeugkarosserie 302 um einen Winkel von 180° gegenüber der Horizontalen gedreht ist.

In dieser unteren Reinigungsstellung wird die zweite Fahrzeugkarosserie 302 mittels der Spritzringe 296 von außen im Bereich der Motorhaube, des Daches und der Heckklappe mit Naßmedium besprüht.

Außerdem werden in dieser unteren Reinigungsstellung, wie aus Fig. 21 zu ersehen ist, der Unterboden der Fahrzeugkarosserie 302 und der Innenraum derselben mittels der im unteren Bereich der Seitenwände 122 der Kabine 114 angeordneten beweglichen Sprühlanzen 150a und die Seitenteile der zweiten Fahrzeugkarosserie 302 mittels der im unteren Bereich der Seitenwände 122 der Kabine 114 angeordneten stationären Sprühlanzen 148a abgesprüht.

Ferner ist in dem in Fig. 18 dargestellten Betriebszustand eine dritte Fahrzeugkarosserie 304 in der in Fig. 18 oben dargestellten zweiten Aufnahme 174b der Drehvorrichtung 110' aufgenommen und befindet sich in einer Einfahrstellung, in welcher die dritte Fahrzeugkarosserie 304 noch nicht gegenüber der Horizontalen gedreht worden ist.

Zugleich ist diese Einfahrstellung eine obere Reinigungsstellung, in welcher die dritte Fahrzeugkarosserie 304 mittels der im oberen Bereich der Seitenwände 122 angeordneten beweglichen Sprühlanzen 150b im Innenbereich und im Außenbereich und mittels der im oberen Bereich der Seitenwände 122 angeordneten stationären Sprühlanzen 148b im Außenbereich abgesprüht wird.

Das von der zweiten Fahrzeugkarosserie 302 in der unteren Reinigungsstellung abtropfende Naßmedium gelangt direkt in die Sammelwanne 282 und fließt aus derselben durch die Naßmedium-Abführleitung 290 ab.

Das von der dritten Fahrzeugkarosserie 304 in der oberen Reinigungsstellung abtropfende Naßmedium gelangt zunächst in die Abflußrinnen 281 der Trennwand 279 der zweiten Aufnahme 174b, strömt in diesen Abflußrinnen 281 bis ans vordere oder hintere Ende der Trennwand 279 und tropft von dort in die Sammelwanne 282, ohne auf die in der unteren Reinigungsstellung befindliche zweite Fahrzeugkarosserie 302 zu gelangen und dieselbe zu verschmutzen.

Ferner befindet sich in dem in Fig. 18 dargestellten Betriebszustand eine vierte Fahrzeugkarosserie 306 auf der Zuführ-Rollenbahn 104 und wird dort mittels der stationären Sprühlanzen 148 und der beweglichen Sprühlanzen 150 von außen abgesprüht.

Nachdem ein Reinigungstakt der Drehvorrichtung 110' abgeschlossen ist, werden die beweglichen Sprühlanzen 150a und 150b in ihre Ruhestellungen gefahren, in denen sie sich außerhalb der Bahn der Fahrzeugkarosserien 302, 304 und des Drehrahmens 152 befinden.

Anschließend wird der Antrieb der Abführ-Rollenbahn 112' betätigt, so daß die erste Fahrzeugkarosserie 300 (in der Darstellung der Fig. 18 nach rechts) aus der Reinigungsstation 100 hinaus in einen sich daran anschließenden Vorbehandlungsabschnitt oder Lackierabschnitt gefördert wird.

Anschließend werden der Rollenbahn-Antriebsteil 193' und der Verriegelungs-Antriebsteil 148' der Verriegelungseinrichtungen 244 in der vorstehend beschriebenen Weise mittels der Kupplungen 192 bzw. 278 mit den Wellen 328 der direkt angetriebenen Tragrollen 316a der unteren Rollenbahnen 310 der Aufnahmen 174a, 174b der Drehvorrichtung 110' bzw. mit den Gewindespindeln 250 der Verriegelungseinrichtungen 244 verbunden. Darauf wird der der Verriegelungseinrichtung 244 der ersten Aufnahme 174a zugeordnete Getriebemotor 194 betätigt, um die Verriegelung des Skidrahmens 106' der zweiten Fahrzeugkarosserie 302 zu lösen. Anschließend wird der den Rollenbahnen 310, 312 der ersten Aufnahme 174a zugeordnete Getriebemotor 194 betätigt, um die zweite Fahrzeugkarosserie 302 mittels der oberen Rollenbahn 312 der ersten Aufnahme 174a der Drehvorrichtung 110' auf die Abführ-Rollenbahn 112' zu fördern.

Darauf werden der Rollenbahn-Antriebsteil 193' und der Verriegelungs-Antriebsteil 148' von den Wellen 328 bzw. den Gewindespindeln 250 abgekuppelt.

Anschließend wird der Drehrahmen 152 mittels des Drehantriebsmotors 162 (in der Blickrichtung der Fig. 18 im Uhrzeigersinn) um 90° um die horizontale Drehachse 160 gedreht, bis der in Fig. 19 dargestellte Betriebszustand erreicht ist.

Nach Abschluß der Drehung um 90° befindet sich die dritte Fahrzeugkarosserie 304 in einer seitlichen Reinigungsposition, in welcher diese Fahrzeugkarosserie um 90° gegenüber der Horizontalen gedreht ist.

Nach Abschluß dieser Drehbewegung werden die Schwalldüsen 280 so weit nach unten auf die Fahrzeugkarosserie 304 zu bewegt, bis die Düsenaustrittsöffnungen nahe der Eingangsöffnungen von in der Bodengruppe dieser Karosserie angeordneten Hohlräumen angeordnet und auf diese Eintrittsöffnungen gerichtet sind.

Ist diese Arbeitestellung der Schwalldüsen 280 erreicht, so wird die Naßmedium-Zufuhr zu den Schwalldüsen 280 geöffnet, so daß Naßmedium aus den Schwalldüsen 280 unter einem Druck von 1 bis 5 bar in die Hohlräume in der Bodengruppe der Fahrzeugkarosserie 304 eindringt, diese im wesentlichen geradlinig durchströmt und an Austrittsöffnungen dieser Hohlräume, welche im wesentlichen vertikal unter den Eintrittsöffnungen liegen, wieder austritt und in die Sammelwanne 282 gelangt. Durch das gezielte Ausspülen der Hohlräume in der Bodengruppe der Fahrzeugkarosserie 304 wird dabei ein besonders guter Reinigungseffekt erzielt.

Die Bodengruppe der in der seitlichen Reinigungsstellung befindlichen dritten Fahrzeugkarosserie 304 wird dabei von hinten nach vorne durchspült.

Die optimale Arbeitsstellung der Schwalldüsen 280 hängt vom Typ der jeweils zu reinigenden Fahrzeugkarosserien ab und wird von einem (nicht dargestellten) Steuergerät der Reinigungsstation 100, welches die Drehbewegung der Drehvorrichtung 110' und die Bewegungen der beweglichen Sprühlanzen 150, 150a, 150b und der Schwalldüsen 280 steuert, in Abhängigkeit von dem Typ der zu reinigenden Fahrzeugkarosserien eingestellt.

Während sich die Fahrzeugkarosserie 304 in der seitlichen Reinigungsstellung befindet, kann sie zugleich mittels der Spritzringe 296 von außen abgesprüht werden.

Nach Abschluß dieses Reinigungstakts der Drehvorrichtung 110' werden die Schwalldüsen 280 nach oben aus der Bahn der Fahrzeugkarosserie 304 und des Drehrahmens 152 hinausbewegt. Anschließend wird der Drehrahmen 152 mittels des Drehantriebsmotors 162 (in der Darstellung der Fig. 19 gesehen) im Uhrzeigersinn um einen Winkel von 90° weitergedreht, bis die dritte Fahrzeugkarosserie 304 die untere Reinigungsstellung einnimmt, in welcher diese Karosserie um 180° gegenüber der Horizontalen gedreht ist.

Sobald die dritte Fahrzeugkarosserie 302 die untere Reinigungsstellung erreicht hat, wird der Sprühvorgang an der Zuführ-Rollenbahn 104 unterbrochen, und die beweglichen Sprühlanzen 150 im Bereich der Zuführ-Rollenbahn 104 werden aus der Bahn der vierten Fahrzeugkarosserie 306 herausbewegt.

Anschließend wird die vierte Fahrzeugkarosserie 306 durch Betätigen des Antriebs der Zuführ-Rollenbahn 104 auf die untere Rollenbahn 310 der ersten Aufnahme 174a der Drehvorrichtung 110' gefördert, indem die Verschiebeschlitten 232 des Rollenbahn-Antriebsteils 193' so verschoben werden, daß die Getriebemotoren 194 mittels der Kupplungen 192 an die Wellen 328 der direkt angetriebenen Tragrollen 316a ankoppeln, und der den Rollenbahnen 310, 312 der ersten Aufnahme 174a zugeordnete Getriebemotor 194 in Betrieb genommen wird.

Anschließend wird die vierte Fahrzeugkarosserie 306 in der ersten Aufnahme 174a der Drehvorrichtung 110' verriegelt, indem der Verriegelungs-Antriebsteil 248' durch Verschieben der Verschiebeschlitten 232 mittels der Kupplungen 278 an die Gewindespindeln 250 der Verriegelungseinrichtungen 244 der Aufnahmen 174a, 174b der Drehvorrichtung 110' angekoppelt und der der Verriegelungseinrichtung 244 der ersten Aufnahme 174a zugeordnete Getriebemotor 194 betätigt wird.

Darauf werden der Rollenbahn-Antriebsteil 193' und der Verriegelungs-Antriebsteil 248' wieder von den Wellen 328 der direkt angetriebenen Tragrollen 316a bzw. von den Gewindespindeln 250 abgekoppelt.

Eine fünfte Fahrzeugkarosserie 308 wird (in der Darstellung der Fig. 20 gesehen von links) aus dem in der Förderrichtung 102 vor der Reinigungsstation 100 liegenden Bereich auf die Zuführ-Rollenbahn 104 gefördert. Anschließend werden die beweglichen Sprühlanzen 150 im Bereich der Zuführ-Rollenbahn 104 wieder in ihre Arbeitsstellungen gefahren, um eine Sprühreinigung der fünften Fahrzeugkarosserie 308 im Außenbereich durchzuführen.

Damit ist der in Fig. 20 dargestellte Betriebszustand erreicht.

Währenddessen wird die in der unteren Reinigungsstellung befindliche dritte Fahrzeugkarosserie 304 mittels der Spritzringe 296 von außen im Bereich der Motorhaube, des Daches und der Heckklappe besprüht.

Außerdem werden in dieser unteren Reinigungsstellung der Unterboden der Fahrzeugkarosserie 304 und der Innenraum derselben mittels der im unteren Bereich der Seitenwände 122 angeordneten beweglichen Sprühlanzen 150a und die Seitenteile der dritten Fahrzeugkarosserie 304 mittels der im unteren Bereich der Seitenwände 122 angeordneten stationären Sprühlanzen 148a abgesprüht.

Nach Abschluß dieses Reinigungstakts der Drehvorrichtung 110' ist der Reinigungszyklus für die dritte Fahrzeugkarosserie 304 in der Drehvorrichtung 110' abgeschlossen, so daß diese Karosserie aus der Drehvorrichtung 110' in der bereits vorstehend im Zusammenhang mit der zweiten Fahrzeugkarosserie 302 beschriebenen Weise ausgefahren werden kann.

## Patentansprüche

1. Reinigungsstation zum Besprühen und/oder Spülen von Fahrzeugkarosserien (108) mit einem Naßmedium, umfassend eine Drehvorrichtung (110, 110'), welche eine Aufnahme (174a, 174b) für eine Fahrzeugkarosserie (108) umfaßt und mittels welcher die Fahrzeugkarosserie (108) in mindestens eine Reinigungsstellung drehbar ist, wobei die Reinigungsstation mindestens eine bewegliche Sprüh- oder Spülvorrichtung (150a, 150b, 280) umfaßt, welche bei in der Reinigungsstellung befindlicher Fahrzeugkarosserie relativ zu der Fahrzeugkarosserie (108) in eine der Reinigungsstellung der Fahrzeugkarosserie (108) zugeordnete Arbeitsstellung bewegbar ist,
**dadurch gekennzeichnet**, daß
die Reinigungsstation (100) mindestens eine bewegliche Spülvorrichtung (280) umfaßt, die in der der Reinigungsstellung zugeordneten Arbeitsstellung so an einer Eingangsöffnung eines Hohlraums der Fahrzeugkarosserie (108) angeordnet ist, daß der betreffende Hohlraum durchspülbar ist.

2. Reinigungsstation nach Anspruch 1, dadurch gekennzeichnet, daß die Reinigungsstation (100) mindestens eine bewegliche Sprüh- oder Spülvorrichtung (150a, 150b) umfaßt, die in einen Innenraum der Fahrzeugkarosserie (108) hinein bewegbar ist.

3. Reinigungsstation nach einem der Ansprüche 1 oder 2, dadurch gekennzeichnet, daß der Hohlraum der Fahrzeugkarosserie (108) in der Reinigungsstellung im wesentlichen vertikal ausgerichtet ist.

4. Reinigungsstation nach einem der Ansprüche 1 bis 3, dadurch gekennzeichnet, daß die Fahrzeugkarosserie (108) mittels der Drehvorrichtung (110; 110') in mehrere voneinander verschiedene Reinigungsstellungen drehbar ist.

5. Reinigungsstation nach einem der Ansprüche 1 bis 4, dadurch gekennzeichnet, daß die Fahrzeugkarosserie (108) mittels der Drehvorrichtung (110; 110') um eine im wesentlichen horizontale Drehachse (160) drehbar ist.

6. Reinigungsstation nach einem der Ansprüche 1 bis 5, dadurch gekennzeichnet, daß die Fahrzeugkarosserie (108) mittels der Drehvorrichtung (110; 110') um eine quer zur Längsrichtung der Fahrzeugkarosserie (108), vorzugsweise im wesentlichen senkrecht zur Längsrichtung der Fahrzeugkarosserie (108), ausgerichtete Drehachse (160) drehbar ist.

7. Reinigungsstation nach einem der Ansprüche 1 bis 6, dadurch gekennzeichnet, daß die Fahrzeugkarosserie (108) mittels der Drehvorrichtung (110; 110') um einen Winkel von mindestens 90° drehbar ist.

8. Reinigungsstation nach Anspruch 7, dadurch gekennzeichnet, daß die Fahrzeugkarosserie (108) mittels der Drehvorrichtung (110; 110') um einen Winkel von mindestens 180° drehbar ist.

9. Reinigungsstation nach Anspruch 8, dadurch gekennzeichnet, daß die Fahrzeugkarosserie (108) mittels der Drehvorrichtung (110; 110') um einen Winkel von 360° drehbar ist.

10. Reinigungsstation nach einem der Ansprüche 1 bis 9, dadurch gekennzeichnet, daß die Fahrzeugkarosserie (108) mittels der Drehvorrichtung (110; 110') in zwei einander entgegengesetzte Drehrichtungen drehbar ist.

11. Reinigungsstation nach einem der Ansprüche 1 bis 10, dadurch gekennzeichnet, daß die Reinigungsstation (100) eine Verriegelungseinrichtung (244) umfaßt, mittels derer die Fahrzeugkarosserie (108) an der Drehvorrichtung (110; 110') festlegbar ist.

12. Reinigungsstation nach Anspruch 11, dadurch gekennzeichnet, daß die Verriegelungseinrichtung (244) einen sich mit der Fahrzeugkarosserie (108) mitdrehenden Verriegelungsteil (246) und einen sich nicht mit der Fahrzeugkarosserie (108) mitdrehenden Antriebsteil (248) umfaßt.

13. Reinigungsstation nach Anspruch 12, dadurch gekennzeichnet, daß die Verriegelungseinrichtung (244) eine Kupplung (278) umfaßt, mittels welcher eine Wirkverbindung zwischen dem Verriegelungsteil (246) und dem Antriebsteil (248) vor dem Drehen der Fahrzeugkarosserie (108) lösbar und nach dem Drehen der Fahrzeugkarosserie (108) wieder herstellbar ist.

14. Reinigungsstation nach einem der Ansprüche 12 oder 13, dadurch gekennzeichnet, daß die Reinigungsstation eine Abdeckung (122) umfaßt, durch welche der Antriebsteil (248) der Verriegelungseinrichtung (244) vor dem zur Reinigung der Fahrzeugkarosserie (108) verwendeten Naßmedium geschützt ist.

15. Reinigungsstation nach einem der Ansprüche 1 bis 14, dadurch gekennzeichnet, daß die Drehvorrichtung (110; 110') zwei Aufnahmen (174a, 174b) für jeweils eine Fahrzeugkarosserie (108) umfaßt.

16. Reinigungsstation nach Anspruch 15, dadurch gekennzeichnet, daß die beiden Aufnahmen (174a, 174b) für Fahrzeugkarosserien (108) auf verschiedenen Seiten der Drehachse (160) der Drehvorrichtung (110; 110') angeordnet sind.

17. Reinigungsstation nach Anspruch 16, dadurch gekennzeichnet, daß die beiden Aufnahmen (174a, 174b) für Fahrzeugkarosserien (108) bezüglich der Drehachse (160) im wesentlichen symmetrisch zueinander ausgebildet sind.

18. Reinigungsstation nach einem der Ansprüche 15 bis 17, dadurch gekennzeichnet, daß die beiden Aufnahmen (174a, 174b) für Fahrzeugkarosserien (108) durch eine dazwischen angeordnete Trennwand (279) voneinander getrennt sind.

19. Reinigungsstation nach Anspruch 18, dadurch gekennzeichnet, daß die Trennwand (279) in der Längsrichtung der in den Aufnahmen (174a, 174b) aufgenommenen Fahrzeugkarosserien (108) und quer zu dieser Längsrichtung über die in den Aufnahmen aufgenommenen Fahrzeugkarosserien (108) übersteht.

20. Reinigungsstation nach Anspruch 19, dadurch gekennzeichnet, daß in der Trennwand (279) Abflußrinnen (281) ausgebildet sind.

21. Reinigungsstation nach Anspruch 20, dadurch gekennzeichnet, daß die Abflußrinnen (281) im wesentlichen parallel zu der Längsrichtung der in den Aufnahmen (174a, 174b) aufgenommenen Fahrzeugkarosserien (108) ausgerichtet sind.

22. Reinigungsstation nach einem der Ansprüche 1 bis 21, dadurch gekennzeichnet, daß die Aufnahme (174a, 174b) der Drehvorrichtung (110; 110') eine Rollenbahn (180; 310) zum Transport von auf Skidrahmen (106; 106') angeordneten Fahrzeugkarosserien (108) umfaßt, an welcher sich der Skidrahmen (106; 106') in einer Standardstellung der in der Aufnahme (174a, 174b) aufgenommenen Fahrzeugkarosserie (108) abstützt.

23. Reinigungsstation nach Anspruch 22, dadurch gekennzeichnet, daß die Aufnahme (174a, 174b) der Drehvorrichtung (110; 110') eine weitere Rollenbahn (312) umfaßt, an welcher sich der Skidrahmen (106') der in der Aufnahme (174a, 174b) aufgenommenen Fahrzeugkarosserie (108) in einer Kopfüberstellung der Fahrzeugkarosserie (108) abstützt.

24. Reinigungsstation nach einem der Ansprüche 22 oder 23, dadurch gekennzeichnet, daß die Reinigungsstation (100) einen Rollenbahn-Antriebsteil (193; 193') umfaßt, welcher sich nicht mit der Fahrzeugkarosserie (108) mitdreht.

25. Reinigungsstation nach Anspruch 24, dadurch gekennzeichnet, daß die Reinigungsstation (100) eine Kupplung (192) umfaßt, mittels welcher eine Wirkverbindung zwischen der Rollenbahn (180; 310) und dem Rollenbahn-Antriebsteil (193; 193') vor dem Drehen der Fahrzeugkarosserie (108) lösbar und nach dem Drehen der Fahrzeugkarosserie (108) wieder herstellbar ist.

26. Reinigungsstation nach einem der Ansprüche 24 oder 25, dadurch gekennzeichnet, daß der Rollenbahn-Antriebsteil (193; 193') einen auf einem verschiebbaren Verschiebeschlitten (232) angeordneten Antriebsmotor (194) umfaßt.

27. Reinigungsstation nach Anspruch 26, dadurch gekennzeichnet, daß der Rollenbahn-Antriebsteil (193') zwei auf synchron zueinander verschiebbaren Verschiebeschlitten (232) angeordnete Antriebsmotoren (194) umfaßt.

28. Reinigungsstation nach einem der Ansprüche 24 bis 27, dadurch gekennzeichnet, daß die Reinigungsstation (100) eine Abdeckung (122) umfaßt, durch welche der Rollenbahn-Antriebsteil (193; 193') vor dem zur Reinigung der Fahrzeugkarosserien (108) verwendeten Naßmedium geschützt ist.

29. Reinigungsstation nach einem der Ansprüche 1 bis 28, dadurch gekennzeichnet, daß die Reinigungsstation (100) eine unterhalb der Drehvorrichtung (110; 110') angeordnete Sammelwanne (282) zum Auffangen des Naßmediums umfaßt.

30. Reinigungsstation nach Anspruch 29, dadurch gekennzeichnet, daß der Boden (284) der Sammelwanne (282) ein Gefälle aufweist und daß eine Abflußöffnung (288) an der tiefsten Stelle des Bodens (284) angeordnet ist.

31. Reinigungsstation nach Anspruch 30, dadurch gekennzeichnet, daß der Boden (284) der Sammelwanne (282) in mehrere Teilbereiche unterteilt ist, welche jeweils eine eigene Abflußöffnung (288) aufweisen.

32. Reinigungsstation nach einem der Ansprüche 1 bis 31, dadurch gekennzeichnet, daß die Reinigungsstation ein Steuergerät umfaßt, welches die Drehvorrichtung (110; 110') so steuert, daß diese die Fahrzeugkarosserien (108) in eine oder mehrere dem jeweiligen Fahrzeugkarosserietyp zugeordnete Reinigungsstellungen dreht, und eine Bewegungsvorrichtung für die mindestens eine bewegliche Sprüh- oder Spülvorrichtung (150, 150a, 150b, 280) so steuert, daß diese in die dem jeweiligen Fahrzeugkarosserietyp und der jeweiligen Reinigungsstellung zugeordnete Arbeitsstellung bewegt wird.

33. Verfahren zum Reinigen von Fahrzeugkarosserien durch Besprühen und/oder Spülen der Fahrzeugkarosserien mit einem Naßmedium, bei dem eine Fahrzeugkarosserie mittels einer Drehvorrichtung in mindestens eine Reinigungsstellung gedreht wird, wobei mindestens eine bewegliche Sprüh- oder Spülvorrichtung bei in der Reinigungsstellung befindlicher Fahrzeugkarosserie relativ zu der Fahrzeugkarosserie in eine der Reinigungsstellung der Fahrzeugkarosserie zugeordnete Arbeitsstellung bewegt wird,
dadurch gekennzeichnet, daß mindestens eine bewegliche Spülvorrichtung bei in der Reinigungsstellung befindlicher Fahrzeugkarosserie in eine der Reinigungsstellung zugeordnete Arbeitsstellung bewegt wird, in welcher die Spülvorrichtung an einer Eingangsöffnung eines Hohlraums der Fahrzeugkarosserie angeordnet ist, und der betreffende Hohlraum durchspült wird.

34. Verfahren nach Anspruch 33, dadurch gekennzeichnet, daß mindestens eine bewegliche Sprüh- oder Spülvorrichtung bei in der Reinigungsstellung befindlicher Fahrzeugkarosserie in einen Innenraum der Fahrzeugkarosserie hineinbewegt wird.

35. Verfahren nach einem der Ansprüche 33 oder 34, dadurch gekennzeichnet, daß der Hohlraum der Fahrzeugkarosserie in der Reinigungsstellung im wesentlichen vertikal ausgerichtet ist.

36. Verfahren nach einem der Ansprüche 33 bis 35, dadurch gekennzeichnet, daß die Fahrzeugkarosserie mittels der Drehvorrichtung nacheinander in mehrere voneinander verschiedene Reinigungsstellungen gedreht wird.

37. Verfahren nach einem der Ansprüche 33 bis 36, dadurch gekennzeichnet, daß die Fahrzeugkarosserie mittels der Drehvorrichtung um eine im wesentlichen horizontale Drehachse gedreht wird.

38. Verfahren nach einem der Ansprüche 33 bis 37, dadurch gekennzeichnet, daß die Fahrzeugkarosserie mittels der Drehvorrichtung um eine quer zur Längsrichtung der Fahrzeugkarosserie, vorzugsweise im wesentlichen senkrecht zur Längsrichtung der Fahrzeugkarosserie, ausgerichtete Drehachse gedreht wird.

39. Verfahren nach einem der Ansprüche 33 bis 38, dadurch gekennzeichnet, daß die Fahrzeugkarosserie mittels der Drehvorrichtung aus einer Ausgangsstellung um einen Winkel von insgesamt mindestens 90° gedreht wird.

40. Verfahren nach Anspruch 39, dadurch gekennzeichnet, daß die Fahrzeugkarosserie mittels der Drehvorrichtung aus einer Ausgangsstellung um einen Winkel von insgesamt mindestens 180° gedreht wird.

41. Verfahren nach Anspruch 40, dadurch gekennzeichnet, daß die Fahrzeugkarosserie mittels der Drehvorrichtung aus einer Ausgangsstellung um einen Winkel von insgesamt 360° gedreht wird.

42. Verfahren nach einem der Ansprüche 32 bis 41, dadurch gekennzeichnet, daß die Fahrzeugkarosserie mittels der Drehvorrichtung nacheinander in zwei einander entgegengesetzte Drehrichtungen gedreht wird.

43. Verfahren nach einem der Ansprüche 33 bis 42, dadurch gekennzeichnet, daß die Fahrzeugkarosserie vor dem Drehen mittels einer Verriegelungseinrichtung an der Drehvorrichtung festgelegt wird.

44. Verfahren nach Anspruch 43, dadurch gekennzeichnet, daß die Verriegelungseinrichtung einen sich mit der Fahrzeugkarosserie mitdrehenden Verriegelungsteil und einen sich nicht mit der Fahrzeugkarosserie mitdrehenden Antriebsteil umfaßt.

45. Verfahren nach Anspruch 44, dadurch gekennzeichnet, daß eine Wirkverbindung zwischen dem Verriegelungsteil und dem Antriebsteil vor dem Drehen der Fahrzeugkarosserie gelöst und nach dem Drehen der Fahrzeugkarosserie wieder hergestellt wird.

46. Verfahren nach einem der Ansprüche 44 oder 45, dadurch gekennzeichnet, daß der Antriebsteil der Verriegelungseinrichtung vor dem zur Reinigung der Fahrzeugkarosserie verwendeten Naßmedium durch eine Abdeckung geschützt wird.

47. Verfahren nach einem der Ansprüche 33 bis 46, dadurch gekennzeichnet, daß mittels der Drehvorrichtung mehrere Fahrzeugkarosserien gleichzeitig in Reinigungsstellungen gedreht werden.

48. Verfahren nach einem der Ansprüche 33 bis 47, dadurch gekennzeichnet, daß die Fahrzeugkarosserie auf einem Skidrahmen angeordnet ist und vor dem Drehen mittels einer Rollenbahn auf die Drehvorrichtung gefördert und nach dem Drehen mittels einer Rollenbahn aus der Drehvorrichtung heraus gefördert wird.

49. Verfahren nach Anspruch 48, dadurch gekennzeichnet, daß die Fahrzeugkarosserie in einer Standardstellung auf die Drehvorrichtung gefördert wird, mittels der Drehvorrichtung in eine Kopfüberstellung gedreht wird und in der Kopfüberstellung aus der Drehvorrichtung heraus gefördert wird.

50. Verfahren nach Anspruch 48, dadurch gekennzeichnet, daß die Fahrzeugkarosserie in einer Kopfüberstellung auf die Drehvorrichtung gefördert wird, mittels der Drehvorrichtung in eine Standardstellung gedreht und in der Standardstellung aus der Drehvorrichtung heraus gefördert wird.

51. Verfahren nach einem der Ansprüche 48 bis 50, dadurch gekennzeichnet, daß die Rollenbahn mittels eines Rollenbahn-Antriebsteils angetrieben wird, welcher sich nicht mit der Fahrzeugkarosserie mitdreht.

52. Verfahren nach Anspruch 51, dadurch gekennzeichnet, daß eine Wirkverbindung zwischen der Rollenbahn und dem Rollenbahn-Antriebsteil vor dem Drehen der Fahrzeugkarosserie gelöst und nach dem Drehen der Fahrzeugkarosserie wieder hergestellt wird.

53. Verfahren nach Anspruch 52, dadurch gekennzeichnet, daß zum Herstellen der Wirkverbindung zwischen der Rollenbahn und dem Rollenbahn-Antriebsteil ein Antriebsmotor der Rollenbahn relativ zu der Rollenbahn verschoben wird.

54. Verfahren nach Anspruch 53, dadurch gekennzeichnet, daß zwei Antriebsmotoren synchron zueinander relativ zu der Rollenbahn verschoben werden.

55. Verfahren nach einem der Ansprüche 51 bis 54, dadurch gekennzeichnet, daß der Rollenbahn-Antriebsteil durch eine Abdeckung vor dem zur Reinigung der Fahrzeugkarosserien verwendeten Naßmedium geschützt wird.

56. Verfahren nach einem der Ansprüche 33 bis 55, dadurch gekennzeichnet, daß das zum Reinigen der Fahrzeugkarosserien verwendete Naßmedium in einer unterhalb der Drehvorrichtung angeordneten Sammelwanne aufgefangen wird.

57. Verfahren nach einem der Ansprüche 33 bis 56, dadurch gekennzeichnet, daß ein Steuergerät die Drehvorrichtung so steuert, daß die Drehvorrichtung die Fahrzeugkarosserie in eine oder mehrere dem jeweiligen Fahrzeugkarosserietyp zugeordnete Reinigungsstellungen gedreht wird, und eine Bewegungsvorrichtung für die mindestens eine bewegliche Sprüh- oder Spülvorrichtung so steuert, daß diese in die dem jeweiligen Fahrzeugkarosserietyp und der jeweiligen Reinigungsstellung zugeordnete Arbeitsstellung bewegt wird.
